# EUROPÄISCHE PATENTSCHRIFT

(11) **EP 3 337 351 B1**
(45) Veröffentlichungstag und Bekanntmachung des Hinweises auf die Patenterteilung: **17.04.2019**
(21) Anmeldenummer: 16781049.8
(22) Anmeldetag: 11.08.2016
(51) Int. Cl.: A46B 9/04, A46B 15/00, A61C 17/20

(54) **WECHSELBARER BÜRSTENKOPF MIT ULTRASCHALLWIRKUNG**
INTERCHANGEABLE BRUSH HEAD WITH ULTRASOUND ACTION
TÊTE DE BROSSE REMPLAÇABLE, À ACTION PAR ULTRASONS

(30) Priorität: 18.08.2015 DE 102015010483
(43) Veröffentlichungstag der Anmeldung: 27.06.2018
(73) Patentinhaber: Vukosavljevic, Jovica, 76199 Karlsruhe (DE); Blumenschein, Peer, 4051 Basel (CH)
(72) Erfinder: Vukosavljevic, Jovica, 76199 Karlsruhe (DE); Blumenschein, Peer, 4051 Basel (CH)
(74) Vertreter: Geitz Truckenmüller Lucht Christ
(86) Internationale Anmeldenummer: PCT/DE2016/000315
(87) Internationale Veröffentlichungsnummer: WO 2017/028835

(56) Entgegenhaltungen:
- WO-A1-2009/108262
- CN-A- 101 836 901
- DE-A1-102011 055 564
- DE-A1-102012 021 262
- JP-A- 2003 088 426

## Beschreibung

Die Erfindung betrifft den wechselbaren Bürstenkopf mit Ultraschallwirkung für die Ultraschallgeräte, insbesondere für die Ultraschallzahnbürste und/oder für das Ultraschall - Therapie-, und Massagegerät gemäß dem Oberbegriff des Patentanspruchs 1.

Solche gattungsgemäßen wechselbaren Bürstenköpfe mit Ultraschallwirkung, bzw. Wechsel-Bürstenköpfe für die Ultraschallzahnbürsten, sind z.b. aus US 7849548 B2, was identisch mit WO 2009108262 A4 ist, bekannt.

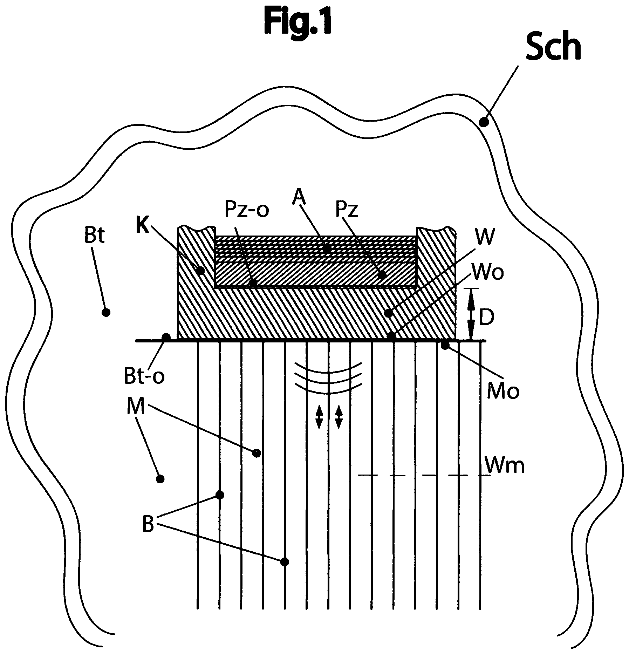

Bei einem derartigen Wechselbürstenkopf ist der elektromechanische Wandler, bzw. ein Piezoelement in der Verlängerung des Handteils fest angebracht worden, und wirkt zusammen mit dem die Borsten aufweisenden wechselbaren Wechseleinsatz derart, daß sich die wirkende Oberfläche des elektromechanischen Wandlers, bzw. des Piezoelementes sehr dicht unter der Borstenspitzenebene befindet, was zwar eine gute Durchleitung des Ultraschalls ins wirksame Medium bringt, was aber den erheblichen sicherheitstechnischen und den medizinischen Nachtei aufweist, daß sich die Anwender an einem so hoch positionierten Hartmaterial leicht verletzen können, oder daß die im Gebrauch ständig mit diesem sehr hoch hinausragenden Merkmal gegen die Zähne anstoßen, und/oder daran schrubben, kratzen, o. dgl, und/oder, daß auch der Bereich des Piezoelementes leicht brechen kann, da die Anwender auch bei den Ultraschallzahnbürsten häufig auch die manuelle Kraft anwenden, was schlechthin aus dem praktischen Gebrauch nicht wegzudenken ist. Dies ist a.a.Ort, dort in Fig.1, 2 ,4 und 5, auch dort Spalte 4 - Zeilen 6 - 9, und im Anspruch 1- unter d.) ersichtlich. Auch die dortige Rastverbindung ist sehr voluminös, sehr schwierig und teuer zu konstruieren und zu fertigen, wobei auch sehr viele mehr oder weniger wackelige Kontaktflächen als Bakterienherde die weiteren Nachteile mit sich bringen.

Dieselben Nachteile, wie oben beschrieben, insb. in den Fig.1 - 2, weist auch JP 2005066024 A auf.

Einen ähnlichen, wechselbaren Bürstenkopf für die Ultraschallzahnbürste weist auch in den Fig. 1-3 und dort im Anspruch 1. die EP 1681956 B1 auf, wo auch eine sehr hohe, voluminöse und runde Auswölbung des aktiven Elements (24)- dort. Fig.1 - 2, vorhanden ist, wobei in der sehr voluminösen, runden Auswölbung mehrere nur sehr schwierig und kostenaufwendig herzustellende Anpassungsschichten (Impedanzanpassungsschichten) vorgesehen sind, die den Ultraschall aus einem im Bürstenkopf vohandenen Piezoelement ins aktive Medium transportieren sollen.

Auch da sind durch viele und lange Verbindungen/Kontaktflächen zwischen den mehreren, dicken Schichten die hohen Verluste an der Ultraschallenergie, der Ultraschallleistung und der Ultraschallintensität hinzunehmen. Ansonsten sind bei diesem Gegenstand die gleichen, weiteren Nachteile vorhanden, wie die dargelegten Nachteile zum obigen US 7849548 B2.

Auch einen wechselbaren Bürstenkopf für die Ultraschallzahnbürste weist US 20100237720 A1 auf, wo ein Piezoelement (22, dortige Fig.1) im Bürstenkopf angebracht ist. Da fehlen jedoch in der ganzen Schrift jegliche konkreten Angaben über die Platzierung, oder die konkrete Funktion desselben Merkmals.

Die JP 2009247800 A weist in den Fig. 1, 3 und 4 ein im Hals des Handteils vorhandenes Piezoelement (12) auf, wo die Übertragungswege der Ultraschallenergie aus den Ultraschallwellen zu den Borstenspitzen (22) und einer Abstrahlfläche (21) sehr lang und kompliziert sind, wobei die Energieverluste sehr hoch sind.

Aus US 5546624 und EP 2637600, was identisch ist mit WO 2012062277 A2, ist die klassisch betriebene Ultraschallzahnbürste bekannt. Bei diesen zwei Geräten, bzw. bei deren wechselbaren Bürstenköpfen ist ein piezoelektrischer Wandler unmittelbar oberhalb des befestigungsseitigen Borstenbereiches angebracht.
Bei derartigen Lösungen entstehen extrem hohe Verluste an der Ultraschallleistung und an der Ultraschallintensität, und zwar in Höhe von über 99,9 %.

Den obigen Erfindungsgegenstand aus WO 2012062277 A2 lässt seit mehreren Jahren die Firma, Emag AG - aus Deutschland, herstellen und international verkaufen, und zwar unter dem kommerziellen Namen, "Emmi Dental Professional".

Dieselbe - hier erfindungsgemäße- Ultraschallzahnbürste "Emmi Dental Professional" hat am 18.09.2014 bei TÜV SÜD Product Service GmbH, - Active Medical Products - München, Fachbereich Ultraschall-Medizintechnik - bei den ultraschall-akustischen Messungen des Borstenfeldes (in ca. 2 mm Entfernung der jeweiligen Borstenspitzen zur Spitze der Messsonde des Nadelhydrophons) mit den geeichten und kalibrierten Nadelhydrophonen der englischen Fachfirma "Precision Acoustic" im entgasten und entionisierten Wasserbad bei einer Temperatur von 21,3°C (alles nach der internationalen Prüfungs-Richtlinie- IEC60601-1 3, und mit IEC 62304 Software Zertifizierung) nur eine durchschnittliche Ultraschallintensität, I = 0,0000124 Watt pro cm² (= 0,0124 Milliwatt pro cm²) erreichen können, - der jeweilige kleinstflächige Spitzenwert lag bei I = 0,0000312 Watt pro cm² (= 0,0312 Milliwatt pro cm²) -, was wiederum auch völlig ungeeignet ist für die Bildung von Kavitäten und den Implosionen der Kavitäten im Reinigungsmedium, die wiederum die Zähne und das Zahnfleisch abrasionsfrei reinigen sollten.

Die gemessenen Werte haben damit rein symbolische Bedeutung . Bekannterweise liegt die Kavitationsschwelle im Frequenzbereich von 280 Khz-1,7 Mhz signifikant höher (Ultraschallzahnbürsten arbeiten in diesem Frequenzbereich), und bewegt sich im Bereich von ca. 0,02 Watt/cm² bis ca. (eher) 1,50 Watt/cm², so dass bei der Ultraschallzahnbürste "Emmi Dental Professional" dieser Wert 1.613-fach bis sogar 121.000-fach unterschritten wird, womit festgestellt werden muß, dass dieselbe (erfindungsgemäße) Ultraschallzahnbürste "Emmi Dental Professional" gar nicht mit Ultraschall die Zähne und das Zahnfleisch reinigen kann.

Gleichzeitig wurden bei der Gelegenheit am 18.09.2014 noch weitere zwei kommerzielle Ultraschallzahnbürsten gemessen, die die kommerziellen Namen "Megasonex M8" und "Smilex" tragen, wobei die beiden Zahnbürsten nach US 5546624 A konstruiert und gebaut worden sind.
Bei den letzten zwei Ultraschallzahnbürsten konnte trotz der sehr empfindlichen, professionellen Messinstrumenten überhaupt gar keine Ultraschallintensität und gar keine Ultraschallleistung gemessen werden, da auch deren Verluste eben extrem hoch sind.

Eine 3-köpfige Ultraschallzahnbürste weist DE 102012021262 A1 auf. Auch da werden ein, oder mehrere Piezoelemente im unmittelbaren Anschluß an den befestigungsseitigen Bereich der Borsten angebracht, wo auch hohe Verluste an Schallleistung und an Schallintensität auftreten.

Demzufolge liegt der Erfindung die Aufgabe zugrunde,die vorhin beschriebenen Nachteile des Standes der Technik zumindest zu reduzieren, bzw. dass gleichzeitig die sicherheitstechnischen Belange der Anwender beachtet werden, unter gleichzeitiger und gleichwertiger Berücksichtigung der notwendigen Erzeugung von Ultraschallintensität und Ultraschallleistung für die Bildung von Kavitationen und/oder Implosionen im wirksamen Reinigungsmedium, wobei dem wirksamen Medium die Energie aus den Ultraschallwellen möglichst direkt aus einer schallabgebenden Fläche zugeleitet wird, unter möglicher Vermeidung der äußerst verlustbehafteter Durchleitung derselben Energie aus den Ultraschallwellen durch den ganzen Körper eines Bürstenkopfes und durch die Borsten.

Diese Aufgabe wird bei einem gattungsgemäßen wechselbaren Bürstenkopf mit Ultraschallwirkung für die Ultraschallgeräte, insbesondere für die Ultraschallzahnbürste und/oder für das Ultraschall - Therapie-, und Massagegerät durch die kennzeichnenden Merkmale des Patentanspruchs 1 gelöst.

Vorteilhafte Weiterbildungen und Ausgestaltungen des wechselbaren Bürstenkopfes mit Ultraschallwirkung für die Ultraschallgeräte, insbesondere für die Ultraschallzahnbürste und/oder für das Ultraschall - Therapie-, und Massagegerät sind in den Unteransprüchen angegeben.

Ausführungsbeispiele der Erfindung sind in den Fig.1 bis Fig.28
dargestellt, und werden anhand der Zeichnungen wie folgt beschrieben :
Es zeigt Fig.1 in Stirn-, und/oder Seitenansicht schematisch den wechselbaren Bürstenkopf mit Ultraschallwirkung für die Ultraschallgeräte, insbesondere für die Ultraschallzahnbürste und/oder für das Ultraschall - Therapie-, und Massagegerät, bestehend aus einem die Borsten (B) fest tragenden Grundelement (Bt-o) und einer Mehrzahl oder Vielzahl von den auf seiner dem wirksamen Medium (M) zugewandten Seite angebrachten Borsten (B), wobei die Borsten (B) ein Borstenfeld bilden, wobei sich dasselbe Borstenfeld im räumlichen Wirkungsbereich eines Schallfeldes (Sch) befindet, wo ersichtlich ist, daß zumindest ein im Schallfeld (Sch) vorhandener elektromechanischer Wandler (Pz), insbesondere ein piezoelektrischer Aktor oder piezoelektrischer Stapelaktor, durch seine Ultraschall abgebende Oberfläche (Pz-o) und durch eine dünne Wand (W) hindurch und seine Ultraschall abgebende Oberfläche (Wo) die Energie durch die Ultraschallwellen ins wirksame Medium (M) abgibt, wobei die dünne Wand (W) umfangsseitig stofflich fest mit einer Kapselung (K) verbunden, bzw. verwachsen ist, wobei alle auf der Kapselung befindlichen Ecken und Kanten abgerundet sind, wobei die dünne Wand und die Kapselung aus einem harten Material mit dem niedrigen Dämpfungskoeffizienten, insbesondere aus einem harten, amorphen Kunststoff, bestehen, wobei die Wandstärke (D) der dünnen Wand gleich/kleiner einen Millimeter beträgt, wobei die Ultraschall abgebende, Seite/Fläche (Pz-o) des elektromechanischen Wandlers (Pz) und die dünne Wand (W) unzertrennlich mit einer sehr dünnen Schicht eines Klebstoffes des niedrigen Dämpfungskoeffizienten unmittelbar verbunden, bzw. verklebt sind, wobei die dem elektromechanischen Wandler (Pz) abgewandte, ultraschallleitende/abgebende Fläche (Wo) der dünnen Wand (W) im Einzelfall ihre höhenmäßige Position innerhalb des Borstenfeldes/des Schallfeldes/ des Mediums (M) zwischen der Position (Wo), in der auch die dem wirksamen Medium zugewandte Seite/Ebene (Bt-o) des die Borsten (B) fest tragenden Grundelementes (Bt-o) liegt, und der Position (Wm) einnimmt, die im Wesentlichen der hälftigen Höhe der jeweils eingesetzten Borsten (B) entspricht, wobei das die Borsten fest tragende Grundelement (Bt-o) fest und stofflich mit dem Körper (Bt) des Trägers des wechselbaren Bürstenkopfes verbunden, und/oder nicht verbunden ist, wobei die dünne Wand (W), die Kapselung (K) und der Körper (Bt) des Trägers des wechselbaren Bürstenkopfes jedenfalls stofflich mit dem in der axialen Verbindung zum Körper (Bt) des Trägers des wechselbaren Bürstenkopfes stehenden Hals (H) verbunden sind, wobei der elektromechanische Wandler (Pz) die Energie durch die Ultraschallwellen oder durch die mechanische Schwingung in einer Achsrichtung abgibt, die parallel oder im Wesentlichen parallel ist mit der Erstreckungsrichtung der Borsten.

Die in der Fig.1 gezeigten senkrechten Doppelpfeile und die konzentrischen "WellenSymbole" deuten die Erstreckungsrichtung der Ultraschallwellen an, wie dieselben aus dem elektromechanischen Wandler (Pz) und der leitenden, dünnen Wand (W) ins wirksame Medium (M) eingeleitet werden, bzw. dass der elektromechanische Wandler (Pz) die Energie durch die Ultraschallwellen oder durch die mechanische Schwingung in einer Achsrichtung abgibt, die parallel oder im Wesentlichen parallel ist mit der Erstreckungsrichtung der Borsten.

Das Bezugszeichen (Sch) (= Schallfeld) deutet den räumlichen Wirkungsbereich des entstehenden Schallfeldes im wirksamen Medium an, das über das räumliche Volumen des Borstenfeldes hinausgeht.

Das ist die allgemeine erfindungsgemäße Form.

Die beinhaltet die beiden grundsätzlichen Ausführungsformen :
a.) dass der komplette Körper (Bt) des Trägers des wechselbaren Bürstenkopfes mit den auf ihm fest angebrachten Borsten (B), mit dem fest verbundenen elektromechanischen Wandler (Pz), der fest verbundenen dünnen Wand (W), der fest verbundenen Kapselung (K), dem fest verbundenen Hals (H) und weiteren Elementen, die noch beschrieben werden, komplett als funktionierendes Produkt wechselbar ist, wie auch
b.) dass nur der Wechseleinsatz (Bt-E) mit den auf ihm fest befindlichen Borsten (B) austauschbar ist, und separat gebaut wird, wobei der Körper (Bt) des Trägers des wechselbaren Bürstenkopfes, der Hals (H), der elektromechanische Wandler (Pz), die dünne Wand (W), die Kapselung (K), zusammen mit weiteren Elementen, die noch beschrieben werden, im normalen, üblichen Gebrauch nicht austauschbar sind, bzw. daß bei dieser grundsätzlichen Ausführungsform der komplette Körper (Bt) des Trägers des wechselbaren Bürstenkopfes unmittelbar durch den Hals (H) mit dem Handgriff (Hg) der kompletten Ultraschallzahnbürste (Uz) dauerhaft mechanisch und elektrisch fest verbunden ist.

Für die Anwendung als Kapselung (K), als die dünne Wand (W), als das die Borsten (B) fest tragende Grundelement (Bt-o), als Hals (H), als der Körper des Wechseleinsatzes (Bt-E) und auch als der komplette Körper (Bt) des Trägers des wechselbaren Bürstenkopfes sind auch die neuentwickelten, sehr leistungsfähigen Materialien, bzw. die Kunststoffe, geeignet, wie z.b. der Kunststoff Graphen, der eine Modifikation des Kohlenstoffs mit zweidimensionaler Struktur darstellt, und der bei extrem dünnen Schichten sehr hohe Härte und die Steifigkeit entwickelt, bei gleichzeitig niedrigem Dämpfungskoeffizienten für die Durchleitung der Ultraschallwellen.
Zukünftig sind auf dem Fachgebiet weitere Fortschritte zu erwarten.

Für die Anwendung als Kapselung (K), als die dünne Wand (W), als das die Borsten (B) fest tragende Grundelement (Bt-o), als der Körper des Wechseleinsatzes (Bt-E), als Hals (H) und auch als der komplette Körper (Bt) des Trägers des wechselbaren Bürstenkopfes sind schon, als harte, amorphe Kunststoffe mit einem niedrigen Dämpfungskoeffizienten für die Leitung/Durchleitung der Ultraschallwellen, z.b. folgende Kunststoffe vorhanden :Polycarbonat (PC), Polystyrol (PS), Polymethylmethacrylat (PMMA), Acrylnitril-Butadien-Styrol (ABS), usw. Zukünftig sind auch auf dem Fachgebiet weitere Fortschritte zu erwarten.

Als Material für den elektromechanischen Wandler (Pz) sind viele Werkstoffe grundsätzlich geeignet, allen voran sind es PZT- Keramiken (Blei-Zirkonat-Titanat), insbesondere die PZT- Keramiken der Werkstoffgruppen 5 und 8, und zwar wegen ihren mechanischen, elektrischen, physikalischen und fertigungstechnischen Eigenschaften.

Der erfindungsgemäße wechselbare Bürstenkopf mit Ultraschallwirkung für die Ultraschallgeräte wirkt in Verbindung mit einer Zahnpasta mit möglichst niedrigem Dämpfungskoeffizienten zusammen.

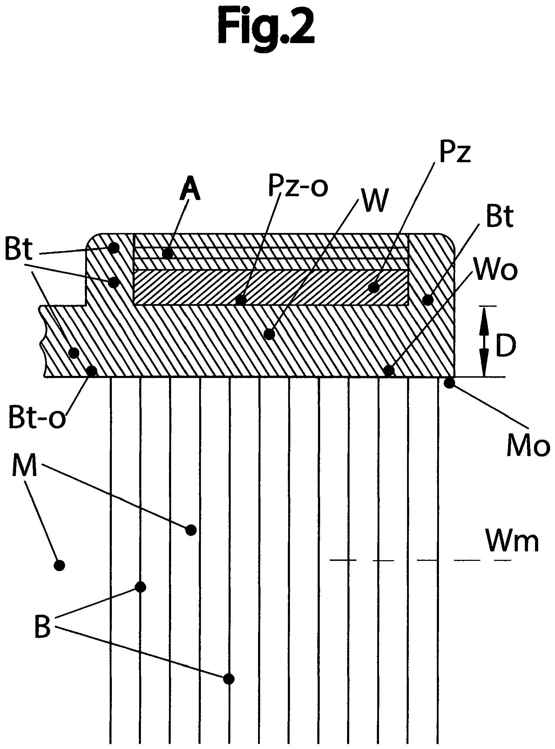

Es zeigt Fig.2 schematisch in Stirn-, und/oder Seitenansicht schematisch den wechselbaren Bürstenkopf mit Ultraschallwirkung für die Ultraschallgeräte, insbesondere für die Ultraschallzahnbürste und/oder für das Ultraschall - Therapie-, und Massagegerät, und zwar in der grundsätzlichen Ausführungsform a.), wobei die dünne Wand (W) und die Kapselung (K) stofflich mit dem die Borsten (B) fest tragenden Grundelement (Bt-o) und dem Körper (Bt) des Trägers des wechselbaren Bürstenkopfes stofflich verbunden sind.
Desweiteren zeigt die Fig.2 schematisch, dass die dünne Wand (W), die Kapselung (K), das Grundelement (Bt-o) und der Körper (Bt) des Trägers des wechselbaren Bürstenkopfes körperlich zusammengehören, dass die zusammen mit dem in der axial ununterbrochenen Verbindung zum Körper (Bt) des Trägers des wechselbaren Bürstenkopfes befindlichen Hals (H) ein fertigungstechnisch einteiliges Stück vor der Beborstung bilden, wobei dieses einteilige Stück aus einem harten Material mit dem niedrigen Dämpfungskoeffizienten, insbesondere aus einem harten, amorphen Kunststoff, besteht, wobei sich oberhalb der Rückseite des elektromechanischen Wandlers (Pz) eine Abdeckung (A) lückenschließend/konturschließend und kanalschließend, wie auch den elektromechanischen Wandler (Pz) mechanisch, elektrisch und chemisch schützend, befindet.

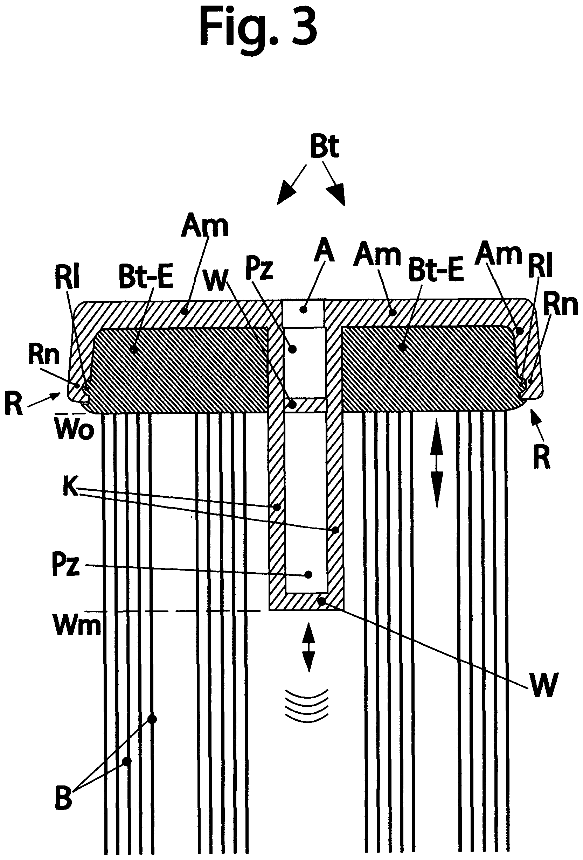

Es zeigt Fig.3 schematisch in Stirnansicht den wechselbaren Bürstenkopf mit Ultraschallwirkung, und zwar in der grundsätzlichen Ausführungsform b.), wobei sichtbar ist, daß die dünne Wand (W), die den elektromechanischen Wandler (Pz) in seiner höhenmäßigen Erstreckung völlig nahtlos und stofflich von allen 4 Seiten fest umschließende und die dünne Wand tragende und höhenmäßig abschließende Kapselung (K) und die mit der Kapselung stofflich fest verbundene Aufnahmemulde (Am) stofflich fest mit dem in der ununterbrochenen axialen Verlängerung der Aufnahmemulde befindlichen Hals (H) insgesamt miteinander stofflich verbunden sind, und daß die fertigungstechnisch vor der Beborstung einteilig gefertigt werden, wobei das der Aufnahmemulde (Am) axial abgewandte Ende des Halses (H) fest und unzertrennlich mit dem Handgriff (Hg) der Ultraschallzahnbürste (Uz) mechanisch und elektrisch verbunden ist, wobei auf der Kapselung (K) alle Ecken und Kanten abgerundet sind, und wobei sich oberhalb der Rückseite des elektromechanischen Wandlers (Pz) eine Abdeckung (A) lückenschließend/konturschließend und kanalschließend befindet, wie auch, dass die Abdeckung den elektromechanischen Wandler (Pz) und die im Kabelkanal (Kk) befindlichen Zuleitungskabel (L), die von einem bestimmten Bereich entlang der länglichen Rückseite des Halses (H) bis zu den Lötpunkten am piezoelektrischen Element verlegt sind, mechanisch, elektrisch und chemisch schützend, bedeckt.

Desweiteren zeigt die Fig.3 schematisch, daß der Körper (Bt) des Trägers des wechselbaren Bürstenkopfes aus einem Boden und den den Boden im wesentlichen senkrecht umfangsseitig vollständig umschließenden Wänden besteht, dass daraus die einseitig offene Aufnahmemulde (Am) gebaut ist, wobei die äußere Gestaltungsform des fest die Borsten (B) tragenden Wechseleinsatzes (Bt-E), der separat hergestellt wird, den Innenkonturen der einseitig offenen Aufnahmemulde (Am) zum gegenseitigen Verrasten angepaßt ist.
Desweiteren zeigt die Fig.3 schematisch auch, dass zwischen dem die Borsten tragenden Wechseleinsatz (Bt-E) und dem Körper (Bt) des Trägers des wechselbaren Bürstenkopfes, bzw. der Aufnahmemulde (Am), eine stabile, aber wieder lösbare Rastverbindung (R) dadurch entsteht, dass die umfangsseitig auf den Innenseiten der ganzen Wandung im mündungsnahen Bereich der Aufnahmemulde (Am) angebrachten, mehrfach vorhandenen Rast-Nuten (Rn) mit den auch umfangsseitig angebrachten , dazu korrespondierenden , auch mehrfach vorhandenen Rastleisten (RI) des Wechseleinsatzes (Bt-E) im Engriff stehen, bzw. daß die Rastleisten (RI) in die Rast-Nuten (Rn) eingreifen, wobei das Einrasten und die Entriegelung in einer Richtung erfolgt, die der Längserstreckung der Borsten parallel oder im Wesentlichen parallel ist.
Die Fig.3 zeigt durch das Bezugszeichen (Wo) die niedrigste höhenmäßige Position der Ultraschall abgebenden Fläche der dünnen Wand (W), wo gezeigt wird, dass sich die Position (Wo) in derselben Ebene befindet, wie die dem wirksamen Medium zugewandte Seite (Bt-o) des Grundelementes, was sicherheitstechnisch, anwendungsmäßig und fertigungstechnisch die meisten Vorteile bringt.

Dieselbe Fig.3 zeigt durch das Bezugszeichen (Wm) und die horizontale unterbrochene Linie höchste höhenmäßige Position der Ultraschall abgebenden Fläche der dünnen Wand (W) in Relation zur Höhe der eingesetzten Borsten (B), wobei diese Höhe (Position) im Wesentlichen der hälftigen Höhe der jeweils eingesetzten Borsten (B) entspricht.
Die Höhe, bzw. die Position der Ultraschall abgebenden Fläche der dünnen Wand (W) muß natürlich immer die Sicherheit und die Anwendungsfreundlichkeit des Anwenders und die konstruktiven/fertigungstechnischen Anforderungen beachten, und steht somit in Kollision zum Wunsch, eine noch intensivere Schallleistung und die Schallintensität damit erreichen zu wollen, einen denkbar kurzen Weg der Ultraschall abgebenden Fläche zu den Zähnen erreichen zu wollen.

Dieses Ausführungsbeispiel zeigt einen axial mittig im Körper (Bt) des Trägers des wechselbaren Bürstenkopfes angebrachten elektromechanischen Wandler (Pz), wobei der Erfindungsgegenstand natürlich nicht nur auf dieses Ausführungsbeispiel festgelegt ist.

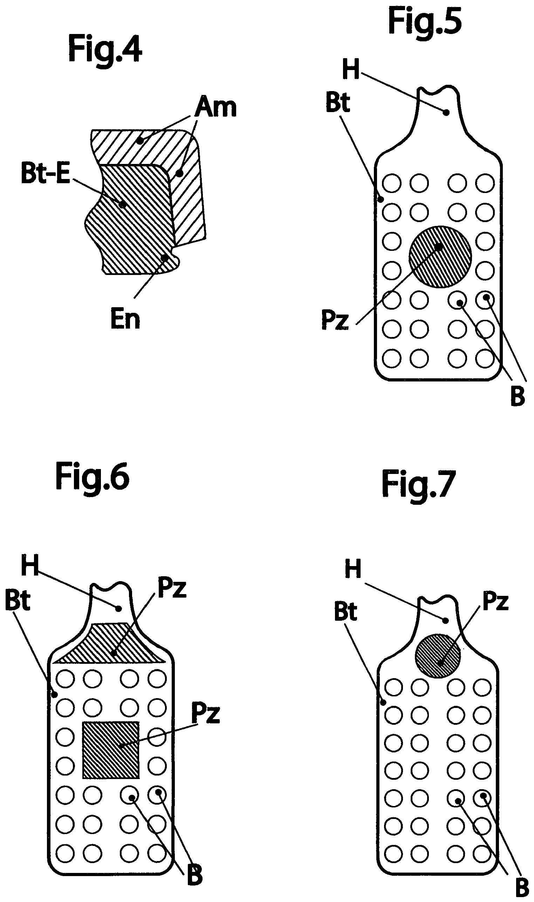

Es zeigt Fig.4 schematisch in einem Querschnitt durch die Wand der Aufnahmemulde (Am), dass in Höhe des Mündungsbereiches der Aufnahmemulde (Am) auf der Außenseite des wechselbaren Wechseleinsatzes (Bt-E), insbesondere im Nahbereich des Halses (H), eine kleinflächige Entriegelungsnut (En) eingebaut ist, wobei auf der räumlich korrespondierenden Stelle der Seitenwand der Aufnahmemulde ein dazu passender Einschnitt vorgesehen ist, dass damit per Hebelwirkung mithilfe der Spitze eines Werkzeugs die Entriegelung vorgenommen werden kann, wobei alle Kanten und Ecken im Entriegelungsbereich abgerundet sind, wobei das Einrasten und die Entriegelung in einer Richtung erfolgt, die der Längserstreckung der Borsten parallel oder im Wesentlichen parallel ist.

Es zeigt Fig.5 schematisch in Draufsicht den erfindungsgemäßen Körper (Bt) des Trägers des wechselbaren Bürstenkopfes , und einen etwa im geometrischen Zentrum platzierten, runden elektromechanischen Wandler (Pz).

Es zeigt Fig.6 schematisch in Draufsicht den erfindungsgemäßen Körper (Bt) des Trägers des wechselbaren Bürstenkopfes und einen etwa im geometrischen Zentrum platzierten, quadratisch-viereckigen elektromechanischen Wandler (Pz), wobei im axialen Anschlußbereich zwischen dem Borstenfeld und dem Hals (H) noch ein zweiter elektromechanischer Wandler (Pz) in einer im wesentlichen trapezartigen Form angebracht ist, wobei die Basisseite des Trapez dem Borstenfeld zugewandt ist.

Es zeigt Fig.7 schematisch in Draufsicht den erfindungsgemäßen Körper (Bt) des Trägers des wechselbaren Bürstenkopfes, und einen innendrinne angebrachten, runden elektromechanischen Wandler (Pz), und zwar im axialen Anschlußbereich zwischen dem Borstenfeld und dem Hals (H).

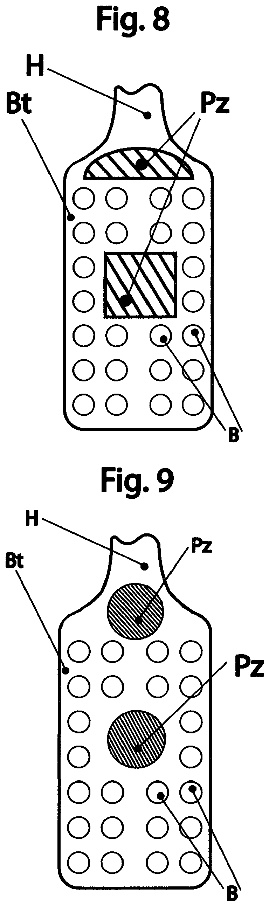

Es zeigt Fig.8 schematisch in Draufsicht den erfindungsgemäßen Körper (Bt) des Trägers des wechselbaren Bürstenkopfes und einen etwa im geometrischen Zentrum platzierten, quadratisch-viereckigen elektromechanischen Wandler (Pz), wobei im axialen Anschlußbereich zwischen dem Borstenfeld und dem Hals (H) noch ein zweiter elektromechanischer Wandler (Pz) in einer etwa kreisabschnittsartigen Form angebracht ist, wobei die Basisseite der kreisabschnittsartigen Form dem Borstenfeld zugewandt ist.

Es zeigt Fig.9 schematisch in Draufsicht den erfindungsgemäßen Körper (Bt) des Trägers des wechselbaren Bürstenkopfes und die zwei runden elektromechanischen Wandler (Pz), wobei der eine elektromechanische Wandler etwa im geometrischen Zentrum platziert ist, und wobei der andere elektromechanische Wandler im axialen Anschlußbereich zwischen dem Borstenfeld und dem Hals (H) platziert ist.

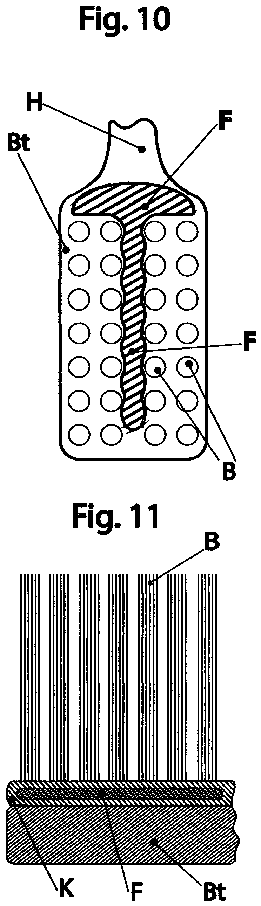

Es zeigt Fig.10 schematisch in Draufsicht den erfindungsgemäßen Körper (Bt) des Trägers des wechselbaren Bürstenkopfes, wo gezeigt wird, dass auf der den Borsten zugewandten Seite des die Borsten fest tragenden Grundelementes (Bt-o) zumindest ein dünnes, piezoelektrisches Element, insbesondere eine dünne piezoelektrische Folie (F) aufgebracht ist, wobei dünnes piezoelektrisches Element und/oder die dünne piezoelektrische Folie (F) die Ultraschallwellen in einer Achsrichtung abgibt, die parallel oder im Wesentlichen parallel ist mit der Erstreckungsrichtung der Borsten.
Die gezeigte, "Schrauben-Form" mit einem flächigen, etwa halbkreismäßigen "Kopfteil" im Anschlußbereich zwischen dem Borstenfeld und dem in axialer Verlängerung befindlichen Teil des Halses ist schon heute anwendbar, und zwar durch die sogenannten Flächenwandler oder Folienwandler, z.b. von der deutschen Firma Pi Ceramic GmbH, die es schon als piezoelektrische/piezokeramische Aktoren gibt.

Für die Anwendung als Kapselung (K) mit der dünnen piezoelektrischen Folie (F), bzw. mit der dünnen, aufgetragenen Schicht des piezoelektrischen Materials, sind auch die neuentwickelten, sehr leistungsfähigen Materialien, bzw. die Kunststoffe, geeignet, wie z.b. der Kunststoff Graphen, der eine Modifikation des Kohlenstoffs mit zweidimensionaler Struktur darstellt, und der bei extrem dünnen Schichten sehr hohe Härte und die Steifigkeit entwickelt, bei gleichzeitig niedrigem Dämpfungskoeffizienten für die Durchleitung der Ultraschallwellen.

Zukünftig sind auf dem Fachgebiet weitere Fortschritte zu erwarten.

Es zeigt Fig.11 schematisch, dass das dünne, piezoelektrische Element -, insbesondere eine dünne piezoelektrische Folie (F) auf der den Borsten zugewandten Seite des die Borsten fest tragenden Grundelementes (Bt-o) von allen Seiten von einer dünnen Kapselung (K) umhüllt ist, bzw., in derselben Kapselung mechanisch fest verkapselt ist, wobei die dünne Kapselung (K) aus einem harten Material mit dem niedrigen Dämpfungskoeffizienten, insbesondere aus einem harten, amorphen Kunststoff, besteht, und wobei die dünne piezoelektrische Folie (F) und/oder das dünne, piezoelektrische Element und die Innenwandung der Kapselung (K) mit einem harten bis steifen Klebstoff mit dem niedrigen Dämpfungskoeffizienten in einer sehr dünnen Schicht des Klebstoffes unmittelbar miteinander fest verbunden, bzw. verklebt sind, und wobei die den freien Borstenenden abgewandte Fläche der Kapselung unmittelbar und fest mit dem Körper (Bt) des Trägers des wechselbaren Bürstenkopfes verbunden, bzw. verklebt ist.

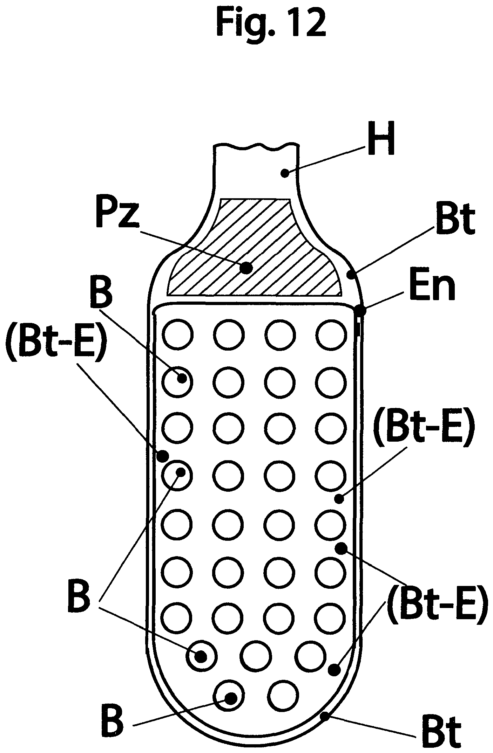

Es zeigt Fig.12 schematisch den erfindungsgemäßen wechselbaren Wechseleinsatz (Bt-E) mit Ultraschallwirkung in Draufsicht, wo ersichtlich ist, dass der elektromechanische Wandler (Pz) im unmittelbaren axialen Anschlussbereich zwischen der Aufnahmemulde (Am), bzw. dem Borstenfeld, und dem axial anschließenden Bereich des Halses (H) im Körper (Bt) des Trägers des wechselbaren Bürstenkopfes platziert ist, wobei der elektromechanische Wandler (Pz) in Draufsicht eine im Wesentlichen trapezartige Form aufweist, wobei die längere Basis-Seite dieses Trapez dem Borstenfeld zugewandt ist, bzw. dass sich die Form des elektromechanischen Wandlers (Pz) in Draufsicht flächenausbreitendsymmetrisch den Aussenkonturen des Körpers (Bt) des Trägers des wechselbaren Bürstenkopfes in dem Bereich maximal anpasst.

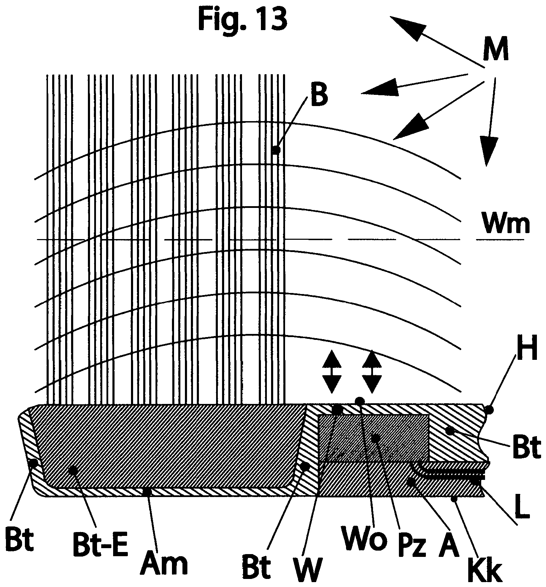

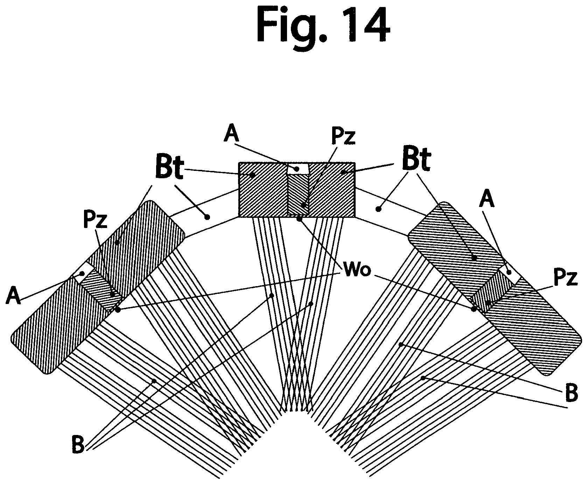

Es zeigt Fig.13 schematisch den erfindungsgemäßen wechselbaren Wechseleinsatz (Bt-E) mit Ultraschallwirkung in einer Seitenansicht, wo gezeigt wird, dass der elektromechanische Wandler (Pz) im unmittelbaren axialen Anschlussbereich zwischen der Aufnahmemulde (Am), bzw. dem Borstenfeld, und dem axial anschließenden Bereich des Halses (H) im Körper (Bt) des Trägers des wechselbaren Bürstenkopfes platziert ist. Das Bild zeigt auch den Verlauf des Kabelkanals (Kk) und der in ihm verlegten Zuleitungskabel (L). Es zeigt auch den in der Aufnahmemulde (Am) eingerasteten Körper des Wechseleinsatzes (Bt-E) und die darauf befestigten Borsten (B) sowie durchs Bezugszeichen (Wm) die im Einzelfall höchste höhenmäßige Position der Ultraschall abgebenden Fläche der dünnen Wand (W) in Relation zur Höhe der eingesetzten Borsten (B).
Die vorhandenen, senkrechten Doppelpfeile und die konzentrischen "Wellensymbole" zeigen die Erstreckungsrichtung der von dem piezoelektrischen Wandler (Pz) durch die dünne Wand (W) abgegebenen Ultraschallwellen, die parallel oder im Wesentlichen parallel mit den Borsten (B) verlaufen.
Das Bezugszeichen (M) mit den in verschiedene Richtungen zeigenden Pfeilen bedeutet das räumlich wirksame Medium, dass aus einem Gemisch aus dem Wasser, dem Speichel und der Zahnpasta besteht.
Es zeigt Fig.14 schematisch den erfindungsgemäßen wechselbaren Bürstenkopf (3-er-Kopf), woraus ersichtlich ist, dass der komplette wechselbare Körper (Bt) des Trägers des wechselbaren Bürstenkopfes aus drei jeweils zueinander radial versetzten, körperlich miteinander verbundenen Bürstenkopfsegmenten besteht, wobei der komplette Grundkörper des 3-er- Bürstenkopfes (Bt) einschließlich des Halses (H), der dünnen Wand (W), der Verbindungselemente und der Kapselung (K) einteilig gebaut ist, zunächst ohne Borsten, und zwar aus einem harten, amorphen Kunststoff, der einen niedrigen Dämpfungskoeffizienten aufweist, und wobei zumindest ein Bürstenkopfsegment, und/oder seine unmittelbare Umgebung den elektromechanischen Wandler (Pz) aufweist.
So ein besonderes Ausführungsbeispiel bietet den Vorteil an, daß gleichzeitig eine Zahnpartie von allen drei Seiten gereinigt wird, was die Zähnereinigung etwas dreifach beschleunigt, und auch, dass so eine Bürstenkopfform wesentlich mehr das aktiv reinigende Medium (M) im gesamten Bereich des Schallfeldes binden kann, was die Effektivität der abgebenden Leistung durch die Ultraschallwellen wesentlich steigert.

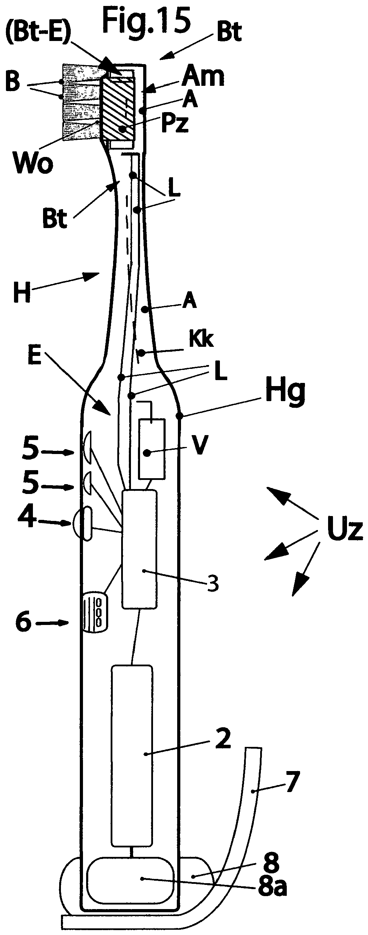

Es zeigt Fig.15 schematisch den erfindungsgemäßen wechselbaren Bürstenkopf in der grundsätzlichen Ausführungsform b.) in Seitenansicht, und zwar zusammen mit dem kompletten Körper der Ultraschallzahnbürste (Uz), wo sichtbar ist, daß von einer im Handgriff (Hg) befindlichen elektrisch - elektronischen Induktionsvorrichtung (8, 8a ) die Stromversorgung der elektrischen Stromversorgungseinheit, bzw. des Akkumulators (2) erfolgt. Durch den Akkumulator wird das ganze Gerät, bzw. werden seine Bauteile, mit Strom versorgt. Eine Ansteuerungs-, und Elektronikeinheit (3) erzeugt die hochfrequenten Ströme, die dann von der elektronischen Endstufe (E) mittels der Zuleitungskabel (L) zu dem elektromechanischen Wandler (Pz) geleitet werden, und wo dann durch den elektromechanischen Wandler (Pz) die Ultraschallwellen erzeugt und weitergeleitet werden.

Da ist auch sichtbar, dass sich oberhalb der Rückseite des elektromechanischen Wandlers (Pz) eine Abdeckung (A) befindet, wobei die Abdeckung den elektromechanischen Wandler (Pz) und die im Kabelkanal (Kk) befindlichen Zuleitungskabel (L), die von einem bestimmten Bereich entlang der länglichen Rückseite des Halses (H) bis zu den Lötpunkten am piezoelektrischen Element verlegt sind, mechanisch, elektrisch und chemisch schützend, bedeckt, und wobei sich die Abdeckung (A) kontinuierlich dem Querschnittsverlauf des Körpers (Bt) des Trägers des wechselbaren Bürstenkopfes und des Halses (H) in ihrer jeweiligen Längserstreckung anpasst. Der Verlauf des Kabelkanals (Kk) ist durch die etwa senkrechte, gestrichelte Linie angedeutet. Der zusätzliche Vibrationsbetrieb wird durch den Vibrator (V) ermöglicht.

Fig.15 zeigt schematisch auch den Bereich des Körpers (Bt) des Trägers des wechselbaren Bürstenkopfes, wo der in die Aufnahmemulde (Am) eingerastete Wechseleinsatz (Bt-E) mit den darauf befindlichen Borsten (B) gezeigt wird.

Vollständigkeitshalber werden auch die im Handgriff vorhandenen Funktionsanzeigen (5), der Betriebsschalter-, bzw. der Programmier-Knopf (4), das Display (6) und der Halter der Ladestation (7) angezeigt.

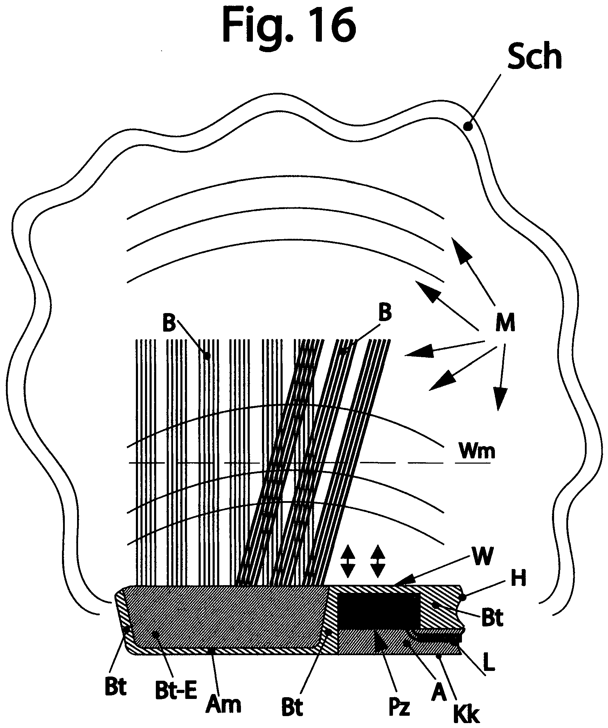

Es zeigt Fig.16 schematisch den erfindungsgemäßen wechselbaren Bürstenkopf mit Ultraschallwirkung in einer Seitenansicht, wo gezeigt wird, dass der elektromechanische Wandler (Pz) im unmittelbaren axialen Anschlussbereich zwischen der Aufnahmemulde (Am), bzw. dem Borstenfeld, und dem axial anschließenden Bereich des Halses (H) im Körper (Bt) des Trägers des wechselbaren Bürstenkopfes platziert ist, wo desweiteren auch gezeigt wird, dass auf dem dem Hals (H) axial zugewandten Endbereich des Borstenfeldes zumindest einige Borstenbündel demselben Bereich des Halses zugeneigt sind. Dies wird durch die fett gezeichneten Borsten (B) gezeigt.

Dies hat den Vorteil, dass dadurch oberhalb der schallabstrahlenden Fläche der dünnen Wand (W) noch mehr Volumen/Masse an Flüssigkeiten aus dem wirksamen Medium (M), bestehend aus Wasser, dem Speichel und der Zahnpasta, im Borstenfeld und im weiterreichenden Schallfeld gebunden wird, so dass damit die Effizienz bei der Übertragung der Energie durch die Ultraschallwellen noch weiter gesteigert wird.

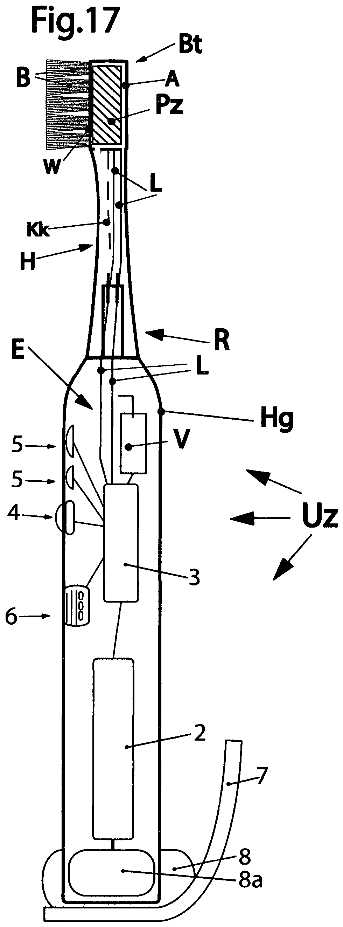

Fig 16 zeigt auch den Verlauf des Kabelkanals (Kk) und der in ihm verlegten Zuleitungskabel (L). Es zeigt auch den in der Aufnahmemulde (Am) eingerasteten Körper des Wechseleinsatzes (Bt-E) und die darauf befestigten Borsten (B) sowie durchs Bezugszeichen (Wm) die im Einzelfall höchste höhenmäßige Position der Ultraschall abgebenden Fläche der dünnen Wand (W) in Relation zur Höhe der eingesetzten Borsten (B).
Die vorhandenen, senkrechten Doppelpfeile und die konzentrischen "Wellensymbole" zeigen die Erstreckungsrichtung der von dem piezoelektrischen Wandler (Pz) durch die dünne Wand (W) abgegebenen Ultraschallwellen, die parallel oder im Wesentlichen parallel mit den Borsten (B) verlaufen.
Das Bezugszeichen (M) mit den in verschiedene Richtungen zeigenden Pfeilen bedeutet das räumlich wirksame Medium, dass aus einem Gemisch aus dem Wasser, dem Speichel und der Zahnpasta besteht, und das Bezugszeichen (Sch) deutet einen im Vergleich zum Borstenfeld noch weiterreichenderen räumlichen Bereich des Schallfeldes (Sch).
Es zeigt Fig.17 schematisch den erfindungsgemäßen wechselbaren Bürstenkopf in der grundsätzlichen Ausführungsform a.) in Seitenansicht, und zwar zusammen mit dem kompletten Körper der Ultraschallzahnbürste (Uz), wo sichtbar ist, dass der dem Borstenfeld axial abgewandte Endbereich des Halses (H) eine elektrische und mechanische Rastverbindung (R) aufweist, wo durch einen im Querschnitt polygonalen Zapfen des Handgriffs (Hg) der Ultraschallzahnbürste (Uz) und die dazu korrespondierende Ausnehmung im unteren Bereich des Halses (H) die verdrehungssichere mechanische Rast - Verbindung (R) zustande kommt, wobei gleichzeitig durch die Metallstifte aus demselben Zapfen und die dazu passenden Anschlusshülsen im Gegenstück des Halses (H) auch die elektrische Verbindung zum komplett wechselbaren Bürstenkopf hergestellt wird.
Fig.17. zeigt auch den Bereich des Körpers (Bt) des Trägers des wechselbaren Bürstenkopfes, wo sichtbar ist, dass der elektromechanische Wandler (Pz) fest im Körper (Bt) des Trägers des wechselbaren Bürstenkopfes angebracht ist, und damit nicht wechselbar sein kann, bzw, dass ein derartiger Bürstenkopf komplett gewechselt werden muß, was nicht besonders umweltfreundlich, und nicht kostensparend ist.
Ansonsten gelten bei diesem Ausführungsbeispiel dieselben Angaben, die zum Ausführungsbeispiel zu Fig. 15 gemacht wurden.

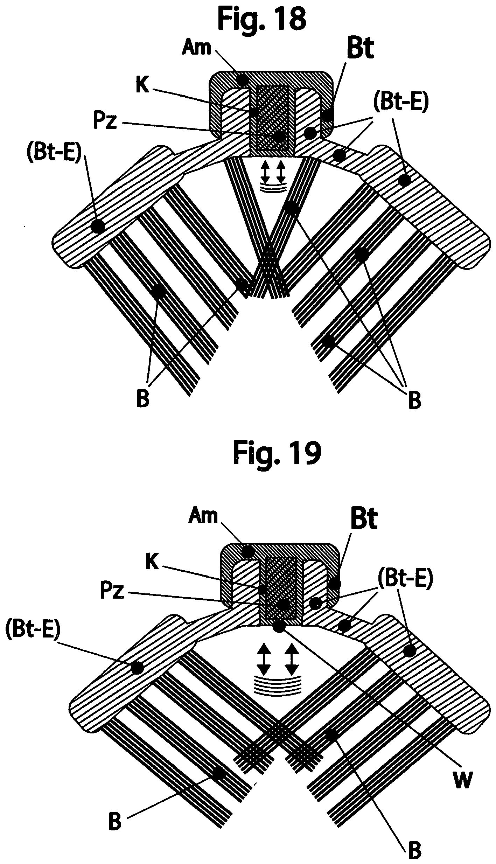

Es zeigt Fig.18 schematisch, dass der wechselbare (3-er-Kopf) - Wechseleinsatz (Bt-E) aus dem einen radial mittig platzierten Grund-Wechseleinsatz (Bt-E) und den darauf drei jeweils zueinander radial versetzten, körperlich miteinander verbundenen Bürstenkopfsegmenten besteht, wobei der Körper (Bt) des hier nicht wechselbaren Trägers des wechselbaren Bürstenkopfes, - einschließlich der Aufnahmemulde (Am), des Halses (H), der dünnen Wand (W) und der Kapselung (K) - einteilig gebaut ist, und zwar aus einem harten, amorphen Kunststoff, der einen niedrigen Dämpfungskoeffizienten aufweist, wobei sich innendrinne in der radial mittig, und/oder im Nahbereich befindlichen Kapselung (K), der elektromechanische Wandler (Pz) befindet, wobei jedes Bürstenkopfsegment sein eigenes Borstenfeld aufweist, wobei der Wechseleinsatz (Bt-E) alle drei Bürstenkopfsegmente einteilig umfasst, bzw. wobei der Wechseleinsatz (Bt-E) einteilig hergestellt wird, zunächst ohne Borsten.
So ein besonderes Ausführungsbeispiel bietet den Vorteil an, daß gleichzeitig eine Zahnpartie von allen drei Seiten gereinigt wird, was die Zähnereinigung etwas dreifach beschleunigt, und auch, dass so eine Bürstenkopfform wesentlich mehr das aktiv reinigende Medium (M) im gesamten räumlichen Bereich des Schallfeldes binden kann, was die Effektivität der abgebenden Leistung durch die Ultraschallwellen wesentlich steigert. Das Ausführungsbeispiel zeigt auch, dass sich die im mittleren Segment befindlichen Borsten (B) mit ihren jeweiligen Borstenenden gegenseitig überkreuzen.

Es zeigt Fig.19 schematisch, dass der wechselbare 2-er-Kopf- Wechseleinsatz (Bt-E) aus dem einen radial mittig platzierten und kein eigenes Borstenfeld aufweisenden Grund-Wechseleinsatz (Bt-E) und den darauf zwei - einmal linksseitig des Grund-Wechseleinsatzes , einmal rechtsseitig des Grund-Wechseleinsatzes - zueinander radial versetzten, körperlich miteinander verbundenen Bürstenkopfsegmenten besteht, wobei der Körper (Bt) des hier nicht wechselbaren Trägers des wechselbaren Bürstenkopfes, - einschließlich der Aufnahmemulde (Am), des Halses (H), der dünnen Wand (W) und der Kapselung (K) - einteilig gebaut ist, und zwar aus einem harten, amorphen Kunststoff, der einen niedrigen Dämpfungskoeffizienten aufweist, wobei jedes der beiden Bürstenkopfsegmente sein eigenes Borstenfeld aufweist, wobei im eingerasteten Zustand funktionsmäßig der elektromechanische Wandler (Pz), der fest in der Kapselung (K) des Körpers (Bt) des hier nicht wechselbaren Trägers des wechselbaren Bürstenkopfes untergebracht ist, aus dem radial-geometrisch mittigen Bereich des unmittelbaren Grund-Wechseleinsatzes (Bt-E), bzw. aus dem Bereich seiner mittigen Öffnung, durch die dünne Wand (W) die Energie der Ultraschallwellen direkt ins wirksame Medium, und ins wirksame Medium im Borstenfeldgebiet/ im Schallfeldgebiet durchleitet, wobei sich zumindest einige Borstenbündel in der Stirnansicht des Wechseleinsatzes (Bt-E) gegeneinander im Bereich der freien Borstenenden überkreuzen.
Die jeweils inneren länglichen Reihen von Borstenbündeln sind bei diesem Ausführungsbeispiel mit längeren Borsten versehen, so daß der überkreuzende Bereich der Borsten noch deutlicher zustande kommt. Damit ersetzt dieser elastische überkreuzende Bereich funktionsmäßig den weggelassenen dritten Kopf, bringt aber konstruktive Erleichterungen und eine einfachere Fertigung.

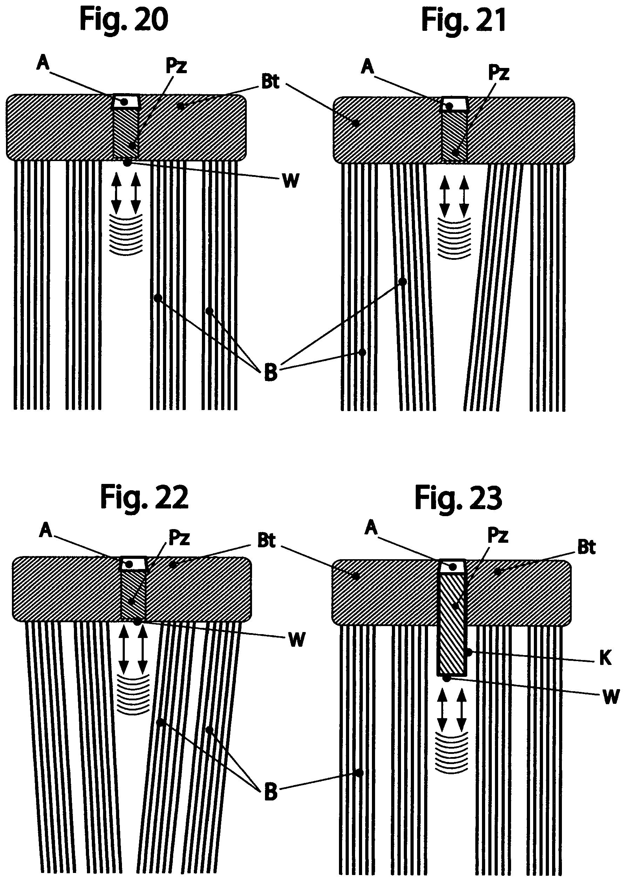

Es zeigt Fig. 20 schematisch in Stirnansicht den Körper (Bt) des Trägers des wechselbaren Bürstenkopfes, mit einem axial mittig zwischen den länglichen Borstenbündelreihen platzierten elektromechanischer Wandler (Pz), mit den im Wesentlichen senkrecht zu der dem wirksamen Medium (M) zugewandten Seite des die Borsten (B) fest tragenden Grundelementes (Bt-o) aufgerichteten Borsten (B).

Es zeigt Fig. 21 schematisch in Stirnansicht den Körper (Bt) des Trägers des wechselbaren Bürstenkopfes, mit einem axial mittig zwischen den länglichen Borstenbündelreihen platzierten elektromechanischer Wandler (Pz), wo sichtbar ist, dass jeweils eine innere Längsreihe der Borstenbündel auf der linken Seite des Borstenfeldes der korrespondierenden inneren Längsreihe der Borstenbündel auf der rechten Seite des Borstenfeldes zugeneigt ist. Damit werden das Schallfeld und das Borstenfeld gleichmäßiger gestaltet.
Es zeigt Fig. 22 schematisch in Stirnansicht den Körper (Bt) des Trägers des wechselbaren Bürstenkopfes, mit einem axial mittig zwischen den länglichen Borstenbündelreihen platzierten elektromechanischer Wandler (Pz), wo sichtbar ist, dass jeweils alle Längsreihen der Borstenbündel auf der linken Seite des Borstenfeldes allen korrespondierenden Längsreihen der Borstenbündel auf der rechten Seite des Borstenfeldes zugeneigt sind. Diese Ausführungsform bringt eine Bündelung des Borstenfeldes und des Schallfeldes.

Es zeigt Fig. 23 schematisch in Stirnansicht den Körper (Bt) des Trägers des wechselbaren Bürstenkopfes, mit einem axial mittig zwischen den länglichen Borstenbündelreihen platzierten elektromechanischer Wandler (Pz), mit den im Wesentlichen senkrecht zu der dem wirksamen Medium (M) zugewandten Seite des die Borsten (B) fest tragenden Grundelementes (Bt-o) aufgerichteten Borsten (B), wobei die schallabgebende Seite der dünnen Wand (W) höhenmäßig etwa 25% der Höhe der eingesetzten Borsten erreicht.

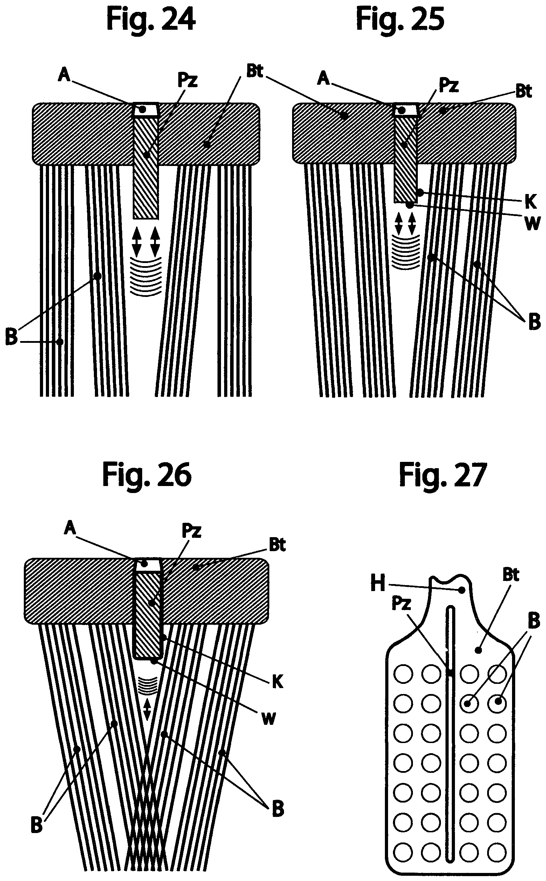

Es zeigt Fig. 24 schematisch in Stirnansicht den Körper (Bt) des Trägers des wechselbaren Bürstenkopfes, mit einem axial mittig zwischen den länglichen Borstenbündelreihen platzierten elektromechanischer Wandler (Pz), wo sichtbar ist, dass jeweils eine innere Längsreihe der Borstenbündel auf der linken Seite des Borstenfeldes der korrespondierenden inneren Längsreihe der Borstenbündel auf der rechten Seite des Borstenfeldes zugeneigt ist. Damit werden das Schallfeld und das Borstenfeld gleichmäßiger gestaltet, wobei die schallabgebende Seite der dünnen Wand (W) höhenmäßig etwa 30% der Höhe der eingesetzten Borsten erreicht.

Es zeigt Fig. 25 schematisch in Stirnansicht den Körper (Bt) des Trägers des wechselbaren Bürstenkopfes, mit einem axial mittig zwischen den länglichen Borstenbündelreihen platzierten elektromechanischer Wandler (Pz), wo sichtbar ist, dass jeweils alle Längsreihen der Borstenbündel auf der linken Seite des Borstenfeldes allen korrespondierenden Längsreihen der Borstenbündel auf der rechten Seite des Borstenfeldes zugeneigt sind. Diese Ausführungsform bringt eine Bündelung des Borstenfeldes und des Schallfeldes, wobei die schallabgebende Seite der dünnen Wand (W) höhenmäßig etwa 20% der Höhe der eingesetzten Borsten erreicht.

Es zeigt Fig. 26 schematisch in Stirnansicht den Körper (Bt) des Trägers des wechselbaren Bürstenkopfes, mit einem axial mittig zwischen den länglichen Borstenbündelreihen platzierten elektromechanischer Wandler (Pz), wo sichtbar ist, dass sich jeweils die inneren , sich axial-länglich erstreckenden Borstenbündelreihen auf der linken Seite des Borstenfeldes, bzw. des Wechseleinsatzes (Bt-E) mit den jeweils korrespondierenden, inneren Längsreihen der Borstenbündel auf der rechten Seite des Borstenfeldes überkreuzen, wobei die schallabgebende Seite der dünnen Wand (W) höhenmäßig etwa 20% der Höhe der eingesetzten Borsten erreicht. Dies bringt den Vorteil, daß die abgegebene Schallleistung und die Schallintensität noch gesteigert werden können, wobei der Anwender gleichzeitig vor Verletzungen und Störungen geschützt wird, da der elektromechanische Wandler (Pz) dabei durch die sich überkreuzenden Borstenbündel gut abgeschirmt ist.

Es zeigt Fig. 27 schematisch in Draufsicht den Körper (Bt) des Trägers des wechselbaren Bürstenkopfes, mit den auf ihm aufgestellten Borsten (B) und einem axial mittig zwischen den länglichen Borstenbündelreihen platzierten elektromechanischen Wandler (Pz).

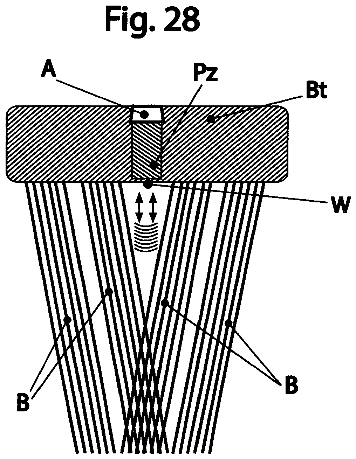

Es zeigt Fig. 28 schematisch in Stirnansicht den Körper (Bt) des Trägers des wechselbaren Bürstenkopfes, mit einem axial mittig zwischen den länglichen Borstenbündelreihen platzierten elektromechanischen Wandler (Pz), wo sichtbar ist, dass sich jeweils die inneren , sich axial-länglich erstreckenden Borstenbündelreihen auf der linken Seite des Borstenfeldes, bzw. des Wechseleinsatzes (Bt-E) mit den jeweils korrespondierenden, inneren Längsreihen der Borstenbündel auf der rechten Seite des Borstenfeldes überkreuzen, wobei die schallabgebende Seite der dünnen Wand (W) höhenmäßig die niedrigste Position (Wo) erreicht.
Dies bringt den Vorteil, daß der Anwender vor Verletzungen und Störungen geschützt wird, da der elektromechanische Wandler (Pz) dabei durch die sich überkreuzenden Borstenbündel gut abgeschirmt ist.

Ein nicht gezeigtes Ausführungsbeispiel beinhaltet derartigen Aufbau des Erfindungsgegenstandes, dass sich die zwischen der Rückseite des elektromechanischen Wandlers (Pz) und der Abdeckung (A) befindliche Schicht für die reflektierende Wirkung der Ultraschallwellen in seine Hauptrichtung eignet. Derartige Schichten sind z.b auf Basis von Kunststoff-Schäumen, versetzt mit Metall-Staub, gebaut. Dazu eignet sich zum Beispiel der Polyurethan-Schaum, versetzt mit Wolfram-Staub.

Ein weiteres nicht gezeigtes Ausführungsbeispiel beinhaltet derartigen Aufbau des Erfindungsgegenstandes, dass dem Material der Borsten zumindest teilweise eine oder mehrere Substanzen zugefügt sind, die einen niedrigen Dämpfungskoeffizienten für die Durchleitung der Ultraschallwellen aufweisen. Dazu geeignet sind z.b. die Glaskugeln, und/oder verschiedene Kohlenstoffverbindungen, und auch die neuentwickelten Materialien, wie zum Beispiel der Kunststoff Graphen, der eine Modifikation des Kohlenstoffs mit zweidimensionaler Struktur darstellt.

### Bezugszeichenverzeichnis :

a.) = Grundsätzliche Ausführungsform a.), wobei der komplette Bürstenkopf mit dem elektromechanischen Wandler (Pz) und dem Hals (H) wechselbar ist
b.) = Grundsätzliche Ausführungsform b.), wobei nur der Wechseleinsatz (Bt-E) mit den darauf befindlichen Borsten (B) wechselbar ist
(A) = Abdeckung des Kabelkanals (Kk), der Zuleitungskabel (L) und des elektromechanischen Wandlers (Pz)
(Am) = Aufnahmemulde
(B) = Borsten
(Bt) = Körper des Trägers des wechselbaren Bürstenkopfes
(Bt-o) = dem wirksamen Medium (M) zugewandte Seite des die Borsten (B) fest tragenden Grundelementes
(Bt-E) austauschbarer Wechseleinsatz mit den Borsten (B) darauf
(D) = Wandstärke der dünnen Wand (W)
(E) = elektronische Endstufe der Ultraschallzahnbürste (Uz)
(En) = Entriegelungsnut
(F) = dünnes, piezoelektrisches Element, insbesondere eine dünne piezoelektrische Folie
(H) = Hals des Körpers des Trägers des wechselbaren Bürstenkopfes, bzw. der einseitig mechanisch und elektrisch fest verbundene Hals mit dem Handgriff
(Hg) der Ultraschallzahnbürste (Uz)
(Hg) = Handgriff der Ultraschallzahnbürste (Uz)
(K) = Kapselung des elektromechanischen Wandlers (Pz), bzw. eines dünnen, piezoelektrischen Elementes , und/oder einer dünnen piezoelektrischen Folie
(Kk) = Kabelkanal der Zuleitungskabel (L) und des elektromechanischen Wandlers (Pz)
(L) = Zuleitungskabel
(M) = wirksames Medium
(Mo) = Kopplungsfläche des wirksamen Mediums (M) und der dem wirksamen Medium (M) zugewandten Seite (Bt-o) des die Borsten (B) fest tragenden Grundelementes
(Pz) = elektromechanischer Wandler
(Pz-o) = die Ultraschall abgebende Oberfläche eines
   elektromechanischen Wandlers (Pz)
(R) = Rastverbindung
(RI) = Rastleisten (RI)
(Rn) = Rast-Nuten
(Sch) = Schallfeld
(V) = Vibrator
(W) = dünne Wand (W)
(Wo) = niedrigste höhenmäßige Position der Ultraschall abgebenden Fläche der dünnen Wand (W), und generell, die Ultraschall abgebende Fläche der dünnen Wand (W)
(Wm) = **höchste** höhenmäßige Position der Ultraschall abgebenden Fläche der dünnen Wand (W) in Relation zur Höhe der eingesetzten Borsten (B)
(Uz) = Ultraschallzahnbürste
2 = elektrische Stromversorgungseinheit, Akku
3 = Ansteuerungs-, und Elektronikeinheit
4 = Betriebsschalter, Programmier-Knopf
5 = Funktionsanzeige
6 = Display
7 = Halter der Ladestation
8, 8a = elektrisch - elektronische Induktionsvorrichtung

## Patentansprüche

1. Wechselbarer Bürstenkopf mit Ultraschallwirkung für die Ultraschallgeräte, insbesondere für die Ultraschallzahnbürste und/oder für das Ultraschall - Therapie-, und Massagegerät, bestehend aus einem die Borsten (B) fest tragenden Grundelement (Bt-o) und einer Mehrzahl oder Vielzahl von den auf seiner dem wirksamen Medium (M) zugewandten Seite angebrachten Borsten (B), wobei die Borsten (B) ein Borstenfeld bilden, wobei sich dasselbe Borstenfeld im räumlichen Wirkungsbereich eines Schallfeldes (Sch) befindet, wobei zumindest ein im Schallfeld (Sch) vorhandener elektromechanischer Wandler (Pz), insbesondere ein piezoelektrischer Aktor oder piezoelektrischer Stapelaktor, durch seine Ultraschall abgebende Oberfläche (Pz-o) und durch eine dünne Wand (W) hindurch und seine Ultraschall abgebende Oberfläche (Wo) die Energie durch die Ultraschallwellen ins wirksame Medium (M) abgibt, wobei die dünne Wand (W) umfangsseitig stofflich fest und lückenlos mit einer Kapselung (K) verbunden, bzw. verwachsen ist, wobei alle auf der Kapselung befindlichen Ecken und Kanten abgerundet sind, wobei die dünne Wand und die Kapselung aus einem harten Material mit dem niedrigen Dämpfungskoeffizienten, insbesondere aus einem harten, amorphen Kunststoff, bestehen, wobei die Wandstärke (D) der dünnen Wand gleich/kleiner einen Millimeter beträgt, wobei die Ultraschall abgebende, Seite/Fläche (Pzo) des elektromechanischen Wandlers (Pz) und die dünne Wand (W) unzertrennlich mit einer sehr dünnen Schicht eines Klebstoffes des niedrigen Dämpfungskoeffizienten unmittelbar verbunden, bzw. verklebt sind, wobei die dem elektromechanischen Wandler (Pz) abgewandte, ultraschallleitende/abgebende Fläche (Wo) der dünnen Wand (W) im Einzelfall ihre höhenmäßige Position innerhalb des Borstenfeldes/des Schallfeldes/ des Mediums (M) zwischen der Position (Wo), in der auch die dem wirksamen Medium zugewandte Seite/Ebene (Bt-o) des die Borsten (B) fest tragenden Grundelementes (Bt-o) liegt, und der Position (Wm) einnimmt, die im Wesentlichen der hälftigen Höhe der jeweils eingesetzten Borsten (B) entspricht, wobei das die Borsten fest tragende Grundelement (Bt-o) fest und stofflich mit dem Körper (Bt) des Trägers des wechselbaren Bürstenkopfes verbunden, und/oder nicht verbunden ist, wobei die dünne Wand (W), die Kapselung (K) und der Körper (Bt) des Trägers des wechselbaren Bürstenkopfes jedenfalls stofflich mit dem in der axialen Verbindung zum Körper (Bt) des Trägers des wechselbaren Bürstenkopfes stehenden Hals (H) verbunden sind, wobei der elektromechanische Wandler (Pz) die Energie durch die Ultraschallwellen oder durch die mechanische Schwingung in einer Achsrichtung abgibt, die parallel oder im Wesentlichen parallel ist mit der Erstreckungsrichtung der Borsten.

2. Der Gegenstand nach Anspruch 1 **dadurch gekennzeichnet, dass** das die Borsten (B) fest tragende Grundelement (Bt-o) fest und stofflich mit dem Körper (Bt) des Trägers des wechselbaren Bürstenkopfes verbunden ist.

3. Der Gegenstand nach Ansprüchen 1 und 2 **dadurch gekennzeichnet, dass** die dünne Wand (W), die Kapselung (K), das die Borsten (B) fest tragende Grundelement (Bt-o) und der Körper (Bt) des Trägers des wechselbaren Bürstenkopfes stofflich mit dem in der axialen Verbindung zum Körper (Bt) des Trägers des wechselbaren Bürstenkopfes stehenden Hals (H) verbunden sind und ein fertigungstechnisch einteiliges Stück vor der Beborstung bilden, wobei dieses einteilige Stück aus einem harten Material mit dem niedrigen Dämpfungskoeffizienten, insbesondere aus einem harten, amorphen Kunststoff, besteht, wobei sich oberhalb der Rückseite des elektromechanischen Wandlers (Pz) eine Abdeckung (A) befindet, wobei die Abdeckung den elektromechanischen Wandler (Pz) und die im Kabelkanal (Kk) befindlichen Zuleitungskabel (L), die von einem bestimmten Bereich entlang der länglichen Rückseite des Halses (H) bis zu den Lötpunkten am piezoelektrischen Element verlegt sind, mechanisch, elektrisch und chemisch schützend, bedeckt, und wobei sich die Abdeckung (A) kontinuierlich dem Querschnittsverlauf des Körpers (Bt) des Trägers des wechselbaren Bürstenkopfes und des Halses (H) in ihrer jeweiligen Längserstreckung anpasst.

4. Der Gegenstand nach Anspruch 1 **dadurch gekennzeichnet, dass** die dünne Wand (W), die den elektromechanischen Wandler (Pz) in seiner höhenmäßigen Erstreckung lückenlos und stofflich von allen 4 Seiten fest umschließende und die dünne Wand tragende und höhenmäßig abschließende Kapselung (K) und die mit der Kapselung stofflich fest verbundene Aufnahmemulde (Am) des Körpers (Bt) des Trägers des wechselbaren Bürstenkopfes stofflich fest mit dem in der ununterbrochenen axialen Verlängerung der Aufnahmemulde befindlichen Hals (H) insgesamt miteinander stofflich verbunden sind, und dass die fertigungstechnisch vor der Beborstung einteilig gefertigt werden, wobei dieses einteilige Stück aus einem harten Material mit dem niedrigen Dämpfungskoeffizienten, insbesondere aus einem harten, amorphen Kunststoff, besteht, wobei das der Aufnahmemulde (Am) axial abgewandte Ende des Halses (H) fest und unzertrennlich mit dem Handgriff (Hg) der Ultraschallzahnbürste (Uz) mechanisch und elektrisch verbunden ist, und wobei sich oberhalb der Rückseite des elektromechanischen Wandlers (Pz) eine Abdeckung (A) befindet, wobei die Abdeckung den elektromechanischen Wandler (Pz) und die im Kabelkanal (Kk) befindlichen Zuleitungskabel (L), die von einem bestimmten Bereich entlang der länglichen Rückseite des Halses (H) bis zu den Lötpunkten am piezoelektrischen Element verlegt sind, mechanisch, elektrisch und chemisch schützend, bedeckt, und wobei sich die Abdeckung (A) kontinuierlich dem Querschnittsverlauf des Körpers (Bt) des Trägers des wechselbaren Bürstenkopfes und des Halses (H) in ihrer jeweiligen Längserstreckung anpasst.

5. Der Gegenstand nach Ansprüchen 1 und 4 **dadurch gekennzeichnet, dass** der Körper (Bt) des Trägers des wechselbaren Bürstenkopfes aus einem Boden und den den Boden im wesentlichen senkrecht umfangsseitig vollständig umschließenden Wänden besteht, dass daraus die einseitig offene Aufnahmemulde (Am) gebaut ist, wobei in die Aufnahmemulde (Am) der Körper des separat hergestellten, die Borsten (B) fest tragenden und austauschbaren Wechseleinsatzes (Bt-E) verrastungsfähig hineinpasst, wobei die äußere Gestaltungsform des Wechseleinsatzes (Bt-E) den Innenkonturen der einseitig offenen Aufnahmemulde (Am) zum gegenseitigen Verrasten angepaßt ist.

6. Der Gegenstand nach Ansprüchen 1 , 2 und 3 **dadurch gekennzeichnet, dass** der dem Borstenfeld axial abgewandte Endbereich des Halses (H) eine elektrische und mechanische Rastverbindung (R) aufweist, wo durch einen im Querschnitt polygonalen Zapfen des Handgriffs (Hg) der Ultraschallzahnbürste (Uz) und die dazu korrespondierende Ausnehmung im unteren Bereich des Halses (H) die verdrehungssichere mechanische Rast - Verbindung (R) zustande kommt, wobei gleichzeitig durch die Metallstifte aus demselben Zapfen und die dazu passenden Anschlusshülsen im Gegenstück des Halses (H) auch die elektrische Verbindung zum komplett wechselbaren Bürstenkopf hergestellt wird.

7. Der Gegenstand nach Ansprüchen 1 , 2, 3, 4, und 5 **dadurch gekennzeichnet, dass** sich die zwischen der Rückseite des elektromechanischen Wandlers (Pz) und der Abdeckung (A) befindliche Schicht für die reflektierende Wirkung der Ultraschallwellen in seine Hauptrichtung eignet.

8. Der Gegenstand nach Ansprüchen 1 , 2, 3, 4 und 5 **dadurch gekennzeichnet, dass** dem Material der Borsten zumindest teilweise eine oder mehrere Substanzen zugefügt sind, die einen niedrigen Dämpfungskoeffizienten für die Durchleitung der Ultraschallwellen aufweisen.

9. Der Gegenstand nach Ansprüchen 1 , 2, 3, 4 und 5 **dadurch gekennzeichnet, dass** auf der den Borsten zugewandten Seite des die Borsten fest tragenden Grundelementes (Bt-o) zumindest ein dünnes, piezoelektrisches Element, insbesondere eine dünne piezoelektrische Folie (F) aufgebracht ist, wobei dünnes piezoelektrisches Element und/oder die dünne piezoelektrische Folie (F) die Ultraschallwellen in einer Achsrichtung abgibt, die parallel oder im Wesentlichen parallel ist mit der Erstreckungsrichtung der Borsten.

10. Der Gegenstand nach Ansprüchen 1 , 2, 3, 4, 5, und 9 **dadurch gekennzeichnet, dass** das dünne, piezoelektrische Element -, insbesondere eine dünne piezoelektrische Folie (F) auf der den Borsten zugewandten Seite des die Borsten fest tragenden Grundelementes (Bt-o) von allen Seiten von einer dünnen Kapselung (K) umhüllt ist, bzw., in derselben Kapselung mechanisch fest verkapselt ist, wobei die dünne Kapselung (K) aus einem harten Material mit dem niedrigen Dämpfungskoeffizienten, insbesondere aus einem harten, amorphen Kunststoff, besteht, und wobei die dünne piezoelektrische Folie (F) und/oder das dünne, piezoelektrische Element und die Innenwandung der Kapselung (K) mit einem harten bis steifen Klebstoff mit dem niedrigen Dämpfungskoeffizienten in einer sehr dünnen Schicht des Klebstoffes unmittelbar miteinander fest verbunden, bzw. verklebt sind, und wobei die den freien Borstenenden abgewandte Fläche der Kapselung unmittelbar und fest mit dem Körper (Bt) des Trägers des wechselbaren Bürstenkopfes verbunden, bzw. verklebt ist.

11. Der Gegenstand nach Ansprüchen 1 , 2, 3, 4 und 5 **dadurch gekennzeichnet, dass** der elektromechanische Wandler (Pz) im unmittelbaren axialen Anschlussbereich zwischen der Aufnahmemulde (Am), bzw. dem Borstenfeld, und dem axial anschließenden Bereich des Halses (H) im Körper (Bt) des Trägers des wechselbaren Bürstenkopfes platziert ist.

12. Der Gegenstand nach Ansprüchen 1 , 2 und 3 **dadurch gekennzeichnet, dass** der komplette wechselbare Körper (Bt) des Trägers des wechselbaren Bürstenkopfes aus drei jeweils zueinander radial versetzten, körperlich miteinander verbundenen Bürstenkopfsegmenten besteht, wobei der komplette Grundkörper des 3-er- Bürstenkopfes (Bt) einschließlich des Halses (H), der dünnen Wand (W), der Verbindungselemente und der Kapselung (K) einteilig gebaut ist, zunächst ohne Borsten, und zwar aus einem harten, amorphen Kunststoff, der einen niedrigen Dämpfungskoeffizienten aufweist, und wobei zumindest ein Bürstenkopfsegment, und/oder seine unmittelbare Umgebung den elektromechanischen Wandler (Pz) aufweist.

13. Der Gegenstand nach Ansprüchen 1, 4, und 5 **dadurch gekennzeichnet, dass** der wechselbare (3-er-Kopf) - Wechseleinsatz (Bt-E) aus dem einen radial mittig platzierten Grund-Wechseleinsatz (Bt-E) und den darauf drei jeweils zueinander radial versetzten, körperlich miteinander verbundenen Bürstenkopfsegmenten besteht, wobei der Körper (Bt) des hier nicht wechselbaren Trägers des wechselbaren Bürstenkopfes, - einschließlich der Aufnahmemulde (Am), des Halses (H), der dünnen Wand (W) und der Kapselung (K) - einteilig gebaut ist, und zwar aus einem harten, amorphen Kunststoff, der einen niedrigen Dämpfungskoeffizienten aufweist, wobei sich innendrinne in der radial mittig, und/oder im Nahbereich befindlichen Kapselung (K), der elektromechanische Wandler (Pz) befindet, wobei jedes Bürstenkopfsegment sein eigenes Borstenfeld aufweist, wobei der Wechseleinsatz (Bt-E) alle drei Bürstenkopfsegmente einteilig umfasst, bzw. wobei der Wechseleinsatz (Bt-E) einteilig hergestellt wird, zunächst ohne Borsten.

14. Der Gegenstand nach Ansprüchen 1, 4, und 5 **dadurch gekennzeichnet, dass** der wechselbare 2-er-Kopf- Wechseleinsatz (Bt-E) aus dem einen radial mittig platzierten und kein eigenes Borstenfeld aufweisenden Grund-Wechseleinsatz (Bt- E) und den darauf zwei - einmal linksseitig des Grund-Wechseleinsatzes, einmal rechtsseitig des Grund-Wechseleinsatzes - zueinander radial versetzten, körperlich miteinander verbundenen Bürstenkopfsegmenten besteht, wobei der Körper (Bt) des hier nicht wechselbaren Trägers des wechselbaren Bürstenkopfes, - einschließlich der Aufnahmemulde (Am), des Halses (H), der dünnen Wand (W) und der Kapselung (K) - einteilig gebaut ist, und zwar aus einem harten, amorphen Kunststoff, der einen niedrigen Dämpfungskoeffizienten aufweist, wobei jedes der beiden Bürstenkopfsegmente sein eigenes Borstenfeld aufweist, wobei im eingerasteten Zustand funktionsmäßig der elektromechanische Wandler (Pz), der fest in der Kapselung (K) des Körpers (Bt) des hier nicht wechselbaren Trägers des wechselbaren Bürstenkopfes untergebracht ist, aus dem radial-geometrisch mittigen Bereich des unmittelbaren Grund-Wechseleinsatzes (Bt-E), bzw. aus dem Bereich seiner mittigen Öffnung, durch die dünne Wand (W) die Energie der Ultraschallwellen direkt ins wirksame Medium, und ins wirksame Medium im Borstenfeldgebiet/ im Schallfeldgebiet durchleitet, wobei sich zumindest einige Borstenbündel in der Stirnansicht des Wechseleinsatzes (Bt-E) gegeneinander im Bereich der freien Borstenenden überkreuzen.

15. Der Gegenstand nach Ansprüchen 1 , 2, 3, 4 und 5 **dadurch gekennzeichnet, dass** der wechselbare Bürstenkopf mit Ultraschallwirkung in Verbindung mit einer Zahnpasta mit möglichst niedrigem Dämpfungskoeffizienten zusammenwirkt.

## Claims

1. Interchangeable brush head with ultrasonic action for ultrasonic devices, in particular for an ultrasonic toothbrush and/or for an ultrasound therapy and massage device, consisting of a basic element (Bt-o), which securely carries the bristles (B), and a multitude or plurality of bristles (B) attached to the side thereof facing towards the effective medium (M), wherein the bristles (B) form a bristle field, wherein the same bristle field is located in the spatial region of action of a sonic field (Sch), wherein at least one electromechanical transducer (Pz) present in the sonic field (Sch), in particular a piezoelectric actuator or piezoelectric stack actuator, emits the energy through the ultrasound-emitting surface (Pz-o) thereof and through a thin wall (W) and the ultrasound-emitting surface (Wo) thereof into the effective medium (M) by way of the ultrasonic waves, wherein the thin wall (W) is peripherally materially bonded or fused to an encapsulation (K) securely and without gaps, wherein all the corners and edges located on the encapsulation are rounded, wherein the thin wall and the encapsulation are made of a hard material having the low damping coefficient, in particular of a hard, amorphous plastic, wherein the wall thickness (D) of the thin wall is equal to/less than one millimetre, wherein the ultrasound-emitting side/surface (Pz-o) of the electromechanical transducer (Pz) and the thin wall (W) are inseparably and directly connected or bonded to one another by a very thin layer of an adhesive having the low damping coefficient, wherein the ultrasound-conducting/ultrasound-emitting surface (Wo) of the thin wall (W) facing away from the electromechanical transducer (Pz) assumes, on a case-by-case basis, its height position within the bristle field/sonic field/medium (M) between the position (Wo), at which the side/plane (Bt-o), facing towards the effective medium, of the basic element (Bt-o) which securely carries the bristles (B) also lies, and the position (Wm) which corresponds substantially to half the height of the respective bristles (B) used, wherein the basic element (Bt-o) which securely carries the bristles is securely and materially connected, and/or not connected, to the body (Bt) of the carrier of the interchangeable brush head, wherein the thin wall (W), the encapsulation (K) and the body (Bt) of the carrier of the interchangeable brush head are in any case materially connected to the neck (H) which lies in the axial connection to the body (Bt) of the carrier of the interchangeable brush head, wherein the electromechanical transducer (Pz) emits the energy by way of the ultrasonic waves or by way of the mechanical vibration in an axial direction that is parallel or substantially parallel to the direction of extension of the bristles.

2. The subject matter according to claim 1, **characterized in that** the basic element (Bt-o) which securely carries the bristles (B) is securely and materially connected to the body (Bt) of the carrier of the interchangeable brush head.

3. The subject matter according to claims 1 and 2, **characterized in that** the thin wall (W), the encapsulation (K), the basic element (Bt-o) which securely carries the bristles (B), and the body (Bt) of the carrier of the interchangeable brush head are materially connected to the neck (H) which lies in the axial connection to the body (Bt) of the carrier of the interchangeable brush head and, prior to installation of the bristles, form a one-part piece from a manufacturing point of view, wherein said one-part piece is made of a hard material having the low damping coefficient, in particular of a hard, amorphous plastic, wherein a cover (A) is located above the rear side of the electromechanical transducer (Pz), wherein the cover covers the electromechanical transducer (Pz) and the supply cables (L) in such a way as to provide mechanical, electrical and chemical protection, said supply cables being located in the cable duct (Kk) and laid from a particular region along the elongate rear side of the neck (H) to the solder points on the piezoelectric element, and wherein the cover (A) continuously adapts to the change in cross-section of the body (Bt) of the carrier of the interchangeable brush head and of the neck (H) in the respective longitudinal extension thereof.

4. The subject matter according to claim 1, **characterized in that** the thin wall (W), the encapsulation (K), which materially surrounds the electromechanical transducer (Pz) on all four sides securely and without gaps in the height extension thereof and which carries the thin wall and forms a closure in the height direction, and the accommodating recess (Am) of the body (Bt) of the carrier of the interchangeable brush head, which is securely materially connected to the encapsulation, are securely materially connected to one another and as a whole to the neck (H) which lies in the uninterrupted axial extension of the accommodating recess, and **in that** they are manufactured as one part prior to installation of the bristles, wherein this one-part piece is made of a hard material having the low damping coefficient, in particular of a hard, amorphous plastic, wherein the end of the neck (H) that is axially facing away from the accommodating recess (Am) is securely and inseparably mechanically and electrically connected to the handle (Hg) of the ultrasonic toothbrush (Uz), and wherein a cover (A) is located above the rear side of the electromechanical transducer (Pz), wherein the cover covers the electromechanical transducer (Pz) and the supply cables (L) in such a way as to provide mechanical, electrical and chemical protection, said supply cables being located in the cable duct (Kk) and laid from a particular region along the elongate rear side of the neck (H) to the solder points on the piezoelectric element, and wherein the cover (A) continuously adapts to the change in cross-section of the body (Bt) of the carrier of the interchangeable brush head and of the neck (H) in the respective longitudinal extension thereof.

5. The subject matter according to claims 1 and 4, **characterized in that** the body (Bt) of the carrier of the interchangeable brush head consists of a base and the walls surrounding the entire periphery of the base in a substantially perpendicular manner, **in that** the accommodating recess (Am), which is open on one side, is constructed therefrom, wherein the body of the separately produced interchangeable replaceable insert (Bt-E) which securely carries the bristles (B) fits into the accommodating recess (Am) in a latchable manner, wherein the outer shape of the replaceable insert (Bt-E) is matched to the inner contours of the accommodating recess (Am), which is open on one side, in order to achieve mutual latching.

6. The subject matter according to claims 1, 2 and 3, **characterized in that** the end region of the neck (H) that is axially facing away from the bristle field has an electrical and mechanical latching connection (R), where the torque-proof mechanical latching connection (R) is brought about by a journal of the handle (Hg) of the ultrasonic toothbrush (Uz), which journal is polygonal in cross-section, and the aperture corresponding thereto in the lower region of the neck (H), wherein the electrical connection to the entirely interchangeable brush head is also established at the same time by the metal pins from the same journal and the corresponding connection sleeves in the mating piece of the neck (H).

7. The subject matter according to claims 1, 2, 3, 4 and 5, **characterized in that** the layer located between the rear side of the electromechanical transducer (Pz) and the cover (A) is suitable for the reflective effect of the ultrasonic waves in its main direction.

8. The subject matter according to claims 1, 2, 3, 4 and 5, **characterized in that** one or more substances which have a low damping coefficient for the passage of the ultrasonic waves are added to the material of the bristles at least in part.

9. The subject matter according to claims 1, 2, 3, 4 and 5, **characterized in that** at least one thin piezoelectric element, in particular a thin piezoelectric film (F), is applied to the bristle-facing side of the basic element (Bt-o) which securely carries the bristles, wherein the thin piezoelectric element and/or the thin piezoelectric film (F) emits the ultrasonic waves in an axial direction that is parallel or substantially parallel to the direction of extension of the bristles.

10. The subject matter according to claims 1, 2, 3, 4, 5 and 9, **characterized in that** the thin piezoelectric element, in particular a thin piezoelectric film (F), on the bristle-facing side of the basic element (Bt-o) which securely carries the bristles is enclosed on all sides by a thin encapsulation (K), or is mechanically securely encapsulated in the same encapsulation, wherein the thin encapsulation (K) is made of a hard material having the low damping coefficient, in particular of a hard, amorphous plastic, and wherein the thin piezoelectric film (F) and/or the thin piezoelectric element and the inner wall of the encapsulation (K) are directly and securely connected or bonded to one another by a hard to stiff adhesive having the low damping coefficient, in a very thin layer of the adhesive, and wherein the surface of the encapsulation facing away from the free bristle ends is directly and securely connected or bonded to the body (Bt) of the carrier of the interchangeable brush head.

11. The subject matter according to claims 1, 2, 3, 4 and 5, **characterized in that** the electromechanical transducer (Pz) is placed in the immediate axial connection region between the accommodating recess (Am) or the bristle field and the axially adjoining region of the neck (H) in the body (Bt) of the carrier of the interchangeable brush head.

12. The subject matter according to claims 1, 2 and 3, **characterized in that** the entire interchangeable body (Bt) of the carrier of the interchangeable brush head consists of three brush head segments which are each offset radially from one another and are physically connected to one another, wherein the entire basic body of the triple brush head (Bt), including the neck (H), the thin wall (W), the connection elements and the encapsulation (K), is constructed as one part, initially without bristles, namely from a hard, amorphous plastic having a low damping coefficient, and wherein at least one brush head segment and/or the immediate vicinity thereof has the electromechanical transducer (Pz).

13. The subject matter according to claims 1, 4 and 5, **characterized in that** the interchangeable (triple-head) replacement insert (Bt-E) consists of the one radially centrally placed basic replacement insert (Bt-E) and the three brush head segments thereon, which are each offset radially from one another and are physically connected to one another, wherein the body (Bt) of the here not interchangeable carrier of the interchangeable brush head, including the accommodating recess (Am), the neck (H), the thin wall (W) and the encapsulation (K), is constructed as one part, namely from a hard, amorphous plastic having a low damping coefficient, wherein the electromechanical transducer (Pz) is located internally in the encapsulation (K), which is located radially centrally and/or in the vicinity thereof, wherein each brush head segment has its own bristle field, wherein the replacement insert (Bt-E) comprises all three brush head segments as one part, and/or wherein the replacement insert (Bt-E) is produced as one part, initially without bristles.

14. The subject matter according to claims 1, 4 and 5, **characterized in that** the interchangeable double-head replacement insert (Bt-E) consists of the one radially centrally placed basic replacement insert (Bt-E), which does not have its own bristle field, and the two brush head segments thereon - one on the left-hand side of the basic replacement insert and one on the right-hand side of the basic replacement insert - which are offset radially from one another and are physically connected to one another, wherein the body (Bt) of the here not interchangeable carrier of the interchangeable brush head, including the accommodating recess (Am), the neck (H), the thin wall (W) and the encapsulation (K), is constructed as one part, namely from a hard, amorphous plastic having a low damping coefficient, wherein each of the two brush head segments has its own bristle field, wherein, in the latched state, the electromechanical transducer (Pz), which is securely accommodated in the encapsulation (K) of the body (Bt) of the here not interchangeable carrier of the interchangeable brush head, functionally conducts the energy of the ultrasonic waves from the geometrically radially central region of the immediate basic replacement insert (Bt-E), or from the region of the central opening thereof, through the thin wall (W) and directly into the effective medium, and into the effective medium in the bristle field region/sonic field region, wherein, in a front view of the replacement insert (Bt-E), at least some bristle bundles cross over one another in the region of the free bristle ends.

15. The subject matter according to claims 1, 2, 3, 4 and 5, **characterized in that** the interchangeable brush head with ultrasonic action collaborates in conjunction with a toothpaste having the lowest possible damping coefficient.

## Revendications

1. Tête de brosse interchangeable à effet ultrasonique pour appareils à ultrasons, en particulier pour une brosse à dents à ultrasons et/ou pour un appareil de traitement et de massage à ultrasons, composé d'un élément de base (Bt-o) portant les soies (B) à demeure et de plusieurs ou d'un grand nombre de soies (B) disposées sur son côté orienté vers le produit actif (M), les soies (B) formant un champ de soies qui se trouve dans le volume d'action d'un champ sonore (Sch), dans laquelle au moins un convertisseur électromécanique (Pz) présent dans le champ sonore (Sch), en particulier un actionneur piézoélectrique ou un actionneur piézoélectrique multicouche transmet l'énergie des ondes ultrasonores au produit actif à travers sa surface émettant les ultrasons (Pz-o) et à travers une paroi mince (W) et sa surface émettant les ultrasons (Wo) délivre l'énergie des ondes ultrasonores au produit actif (M), la paroi mince (W) étant fixée ou soudée sur sa circonférence en solidarité de matière et sans lacune avec une capsule (K), tous les coins et les arêtes qui se trouvent sur la capsule étant arrondis, la paroi mince et la capsule se composant d'un matériau dur ayant un faible coefficient d'atténuation, en particulier d'une matière plastique amorphe et dure, l'épaisseur de paroi (D) de la paroi mince étant égale ou inférieure à un millimètre, la face/surface émettant des ultrasons (Pz-o) du convertisseur électromécanique (Pz) et la paroi mince (W) étant réunies directement, ou collées, de façon indissociable par une très fine couche d'un adhésif à faible coefficient d'atténuation, la surface conduisant/émettant des ultrasons (Wo) de la paroi mince (W) tournée à l'opposé du convertisseur électromécanique (Pz) se trouvant dans chaque cas à une position en hauteur à l'intérieur du champ de soies/du champ sonore/du produit (M) entre la position (Wo), dans laquelle se trouve également la face/le plan (Bt-o) tourné vers le produit actif de l'élément de base (Bt-o) portant les soies (B) à demeure, et la position (Wm) qui correspond sensiblement à la moitié de la hauteur des soies (B) utilisées, l'élément de base (Bt-o) portant les soies à demeure étant fixé et relié en solidarité de matière au corps (Bt) du support de la tête de brosse interchangeable et/ou n'étant pas relié, la paroi mince (W), la capsule (K) et le corps (Bt) du support de la tête de brosse interchangeable étant dans tous les cas reliés en solidarité de matière au col (H) relié dans le sens axial au corps (Bt) du support de la tête de brosse interchangeable, le convertisseur électromécanique (Pz) émettant l'énergie par les ondes ultrasonores ou par la vibration mécanique dans une direction d'axe parallèle ou sensiblement parallèle au sens de l'étendue des soies.

2. L'objet de la revendication 1, **caractérisé en ce que** l'élément de base (Bt-o) portant les soies (B) à demeure est fixé en solidarité de matière avec le corps (Bt) du support de la tête de brosse interchangeable.

3. L'objet des revendications 1 et 2, **caractérisé en ce que** la paroi mince (W), la capsule (K), l'élément de base (Bt-o) portant les soies (B) à demeure et le corps (Bt) du support de la tête de brosse interchangeable sont reliés en solidarité de matière avec le col (H) relié dans le sens axial au corps (Bt) du support de la tête de brosse interchangeable et forment une pièce fabriquée d'un seul tenant avant la brosse, cette pièce d'un seul tenant étant composée d'un matériau dur ayant un faible coefficient d'atténuation, en particulier d'une matière plastique amorphe et dure, une couverture (A) étant disposée au-dessus de la face arrière du convertisseur électromécanique (Pz), la couverture recouvrant le convertisseur électromécanique (Pz) et le câble d'arrivée (L) qui se trouve dans le conduit de câble (Kk) et qui est posé d'une certaine zone le long de la face arrière allongée du col (H) aux points de brasage sur l'élément piézoélectrique en assurant leur protection mécanique, électrique et chimique, et la couverture (A) s'adaptant de façon continue à la forme en section du corps (Bt) du support de la tête de brosse interchangeable et du col (H) sur leur longueur respective.

4. L'objet de la revendication 1, **caractérisé en ce que** la paroi mince (W), la capsule (K) entourant à demeure le convertisseur électromécanique (Pz) sans lacune sur les quatre côtés sur sa hauteur et portant et fermant en hauteur la paroi mince et la cuvette de logement (Am) du corps (Bt) reliée par solidarité de matière à la capsule du support de la tête de brosse interchangeable sont reliés tous ensemble par solidarité de matière avec le col (H) qui se trouve dans le prolongement axial ininterrompu de la cuvette de logement, et **en ce qu'**ils sont fabriqués d'une seule pièce avant la brosse, cette partie d'une seule pièce se composant d'un matériau dur ayant le faible coefficient d'atténuation, en particulier d'une matière plastique amorphe et dure, l'extrémité du col (H) opposée dans le sens axial à la cuvette de logement (Am) étant reliée de manière fixe et indissociable au manche (Hg) de la brosse à dents à ultrasons (Uz) du point de vue mécanique et électrique, et une couverture (A) étant placée au-dessus de la face arrière du convertisseur électromécanique (Pz), laquelle couverture couvre le convertisseur électromécanique (Pz) et les câbles d'arrivée (L) qui se trouvent dans le conduit de câble (Kk), qui sont posés d'une certaine zone le long de la face arrière allongée du col (H) aux points de brasage sur l'élément piézoélectrique, en assurant leur protection mécanique, électrique et chimique, et la couverture (A) s'adaptant en continu à la forme en section du corps (Bt) du support de la tête de brosse interchangeable et du col (H) sur leur longueur respective.

5. L'objet des revendications 1 et 4, **caractérisé en ce que** le corps (Bt) du support de la tête de brosse interchangeable se compose d'un fond et de parois entourant complètement le fond sur sa circonférence de façon sensiblement verticale, **en ce qu'**une cuvette de logement (Am) ouverte d'un côté est ainsi formée, le corps de l'insert interchangeable (Bt-E) fabriqué séparément et qui porte les soies (B) à demeure s'adaptant à l'intérieur avec possibilité d'enclenchement, la forme extérieure de l'insert interchangeable (Bt-E) étant adaptée aux contours intérieurs de la cuvette de logement (Am) ouverte d'un côté en vue de leur enclenchement mutuel.

6. L'objet des revendications 1, 2 et 3, **caractérisé en ce que** la partie d'extrémité du col (H) opposée dans le sens axial au champ de soies (H) présente un assemblage enclenché électrique et mécanique (R), où un goujon de section polygonale du manche (Hg) de la brosse à dents à ultrasons (Uz) et le creux correspondant dans la partie inférieure du col (H) créent l'assemblage enclenché mécanique (R) fixe en rotation, les broches métalliques sortant de ce même goujon et les douilles de branchement correspondantes dans la pièce correspondante du col (H) établissant aussi l'assemblage électrique avec la tête de brosse interchangeable d'un bloc.

7. L'objet des revendications 1, 2, 3, 4 et 5, **caractérisé en ce qu'**une couche placée entre la face arrière du convertisseur électromécanique (Pz) et la couverture (A) permet l'effet de réflexion des ondes ultrasonores dans sa direction principale.

8. L'objet des revendications 1, 2, 3, 4 et 5, **caractérisé en ce que** le matériau des soies est additionné au moins en partie d'une ou plusieurs substances qui présentent un faible coefficient d'atténuation pour la conduction des ondes ultrasonores.

9. L'objet des revendications 1, 2, 3, 4 et 5, **caractérisé en ce qu'**au moins un élément piézoélectrique mince, en particulier un film piézoélectrique mince (F), est appliqué sur le côté tourné vers les soies de l'élément de base (Bt-o) portant les soies à demeure, l'élément piézoélectrique mince et/ou le film piézoélectrique mince (F) émettant les ondes ultrasonores dans la direction d'un axe parallèle ou sensiblement parallèle au sens d'extension des soies.

10. L'objet des revendications 1, 2, 3, 4, 5 et 9, **caractérisé en ce que** l'élément piézoélectrique mince, en particulier un film piézoélectrique mince (F), est enveloppé de tous côtés, sur le côté tourné vers les soies de l'élément de base (Bt-o) portant les soies à demeure, par une capsule mince (K) ou encapsulé de façon mécaniquement fixe dans la même capsule, la capsule mince (K) se composant d'un matériau dur ayant le faible coefficient d'atténuation, en particulier d'une matière plastique amorphe et dure, et le film piézoélectrique mince (F) et/ou l'élément piézoélectrique mince et la paroi intérieure de la capsule (K) étant reliés à demeure ou collés entre eux directement avec un adhésif dur à rigide ayant le faible coefficient d'atténuation en couche très mince, et la surface de la capsule tournée à l'opposé des extrémités libres des soies étant reliée ou collée directement et à demeure au corps (Bt) du support de la tête de brosse interchangeable.

11. L'objet des revendications 1, 2, 3, 4 et 5, **caractérisé en ce que** le convertisseur électromécanique (Pz) est placé dans la zone de raccordement axial immédiat entre la cuvette de logement (Am) ou le champ de soies et la zone raccordée axialement du col (H) dans le corps (Bt) du support de la tête de brosse interchangeable.

12. L'objet des revendications 1, 2 et 3, **caractérisé en ce que** le corps (Bt) interchangeable d'un bloc du support de la tête de brosse interchangeable se compose de trois segments de tête de brosse décalés les uns par rapport aux autres dans le sens radial et reliés les uns aux autres physiquement, le corps de base complet de la triple tête de brosse (Bt), y compris le col (H), la paroi mince (W), les éléments de liaison et la capsule (K), étant fabriqué d'une pièce, d'abord sans soies, à partir d'une matière plastique amorphe et dure ayant un faible coefficient d'atténuation, et au moins un segment de tête de brosse et/ou son environnement immédiat comportant le convertisseur électromécanique (Pz).

13. L'objet des revendications 1, 4 et 5, **caractérisé en ce que** l'insert (de tête triple) interchangeable (Bt-E) se compose d'un insert interchangeable de base (Bt-E) placé au centre dans le sens radial et des trois segments de tête de brosse décalés les uns par rapport aux autres dans le sens radial et reliés les uns aux autres physiquement, le corps (Bt) du support de la tête de brosse interchangeable qui n'est pas interchangeable ici, y compris la cuvette de réception (Am), le col (H), la paroi mince (W) et la capsule (K), étant formé d'une pièce à partir d'une matière plastique amorphe et dure ayant un faible coefficient d'atténuation, le convertisseur électromécanique (Pz) se trouvant à l'intérieur, dans la capsule (K) située au centre dans le sens radial et/ou à proximité, chaque segment de tête de brosse possédant son propre champ de soies, l'insert interchangeable (Bt-E) comprenant les trois segments de tête de brosse d'une pièce ou l'insert interchangeable (Bt-E) étant fabriqué d'une pièce, d'abord sans soies.

14. L'objet des revendications 1 , 4 et 5, **caractérisé en ce que** l'insert interchangeable (Bt-E) de tête double se compose de l'insert interchangeable de base (Bt-E), placé au centre dans le sens radial et ne possédant pas de champ de soies propre, et des deux segments de tête de brosse décalés dessus, l'un vers la gauche de l'insert interchangeable, l'autre vers la droite de l'insert interchangeable, décalés l'un par rapport à l'autre dans le sens radial et reliés l'un à l'autre physiquement, le corps (Bt) du support de tête de brosse interchangeable qui n'est pas interchangeable ici, y compris la cuvette de réception (Am), le col (H), la paroi mince (W) et la capsule (K), étant formé d'une pièce à partir d'une matière plastique amorphe et dure ayant un faible coefficient d'atténuation, chacun des deux segments de tête de brosse ayant son propre champ de soies, le convertisseur électromécanique (Pz) logé à demeure dans la capsule (K) du corps (Bt) du support de tête de brosse interchangeable qui n'est pas interchangeable ici conduisant, dans l'état enclenché, du point de vue fonctionnel, l'énergie des ondes ultrasonores directement à travers la paroi mince (W) dans le produit actif et dans le produit actif dans la zone du champ de soies/dans la zone du champ sonore à partir de la zone centrale dans le sens radial de l'insert interchangeable de base (Bt-E) direct ou à partir de la zone de son ouverture centrale, quelques touffes de soies au moins se croisant en vue de face de l'insert interchangeable (Bt-E) dans la zone des extrémités libres des soies.

15. L'objet des revendications 1, 2, 3, 4 et 5, **caractérisé en ce que** la tête de brosse interchangeable à effet ultrasonore coopère avec une pâte dentifrice ayant le plus faible coefficient d'atténuation possible.
